# EUROPEAN PATENT APPLICATION

(11) **EP 2 979 813 A1**
(43) Date of publication of application: **03.02.2016**
(21) Application number: 14775430.3
(22) Date of filing: 12.03.2014
(51) Int. Cl.: B24B 9/14, G02C 7/02, G02C 13/00, G06F 17/50

(54) **SHAPE SPLITTING METHOD, SHAPE SPLITTING PROGRAM, DATA PROCESSING DEVICE, LENS DATA PROCESSING METHOD, LENS MACHINING METHOD, AND LENS DATA PROCESSING PROGRAM**

(30) Priority: 28.03.2013 JP 2013070421; 28.03.2013 JP 2013070423
(71) Applicant: HOYA Corporation, Tokyo 161-8525 (JP)
(72) Inventor: DAIMARU Takashi, Tokyo 161-8525 (JP); SUZUE Takahiro, Tokyo 161-8525 (JP); SAMUKAWA Masahiko, Tokyo 161-8525 (JP)
(74) Representative: Betten & Resch
(86) International application number: PCT/JP2014/056437
(87) International publication number: WO 2014/156635

(57) **Abstract**

A shape division method is provided for dividing three-dimensional shape data of a spectacle lens into data regarding a plurality of shape element portions used for edging the spectacle lens, including: a projection shape acquisition step of acquiring data regarding a projection shape of a circumferential edge of the spectacle lens as projection shape data based on the three-dimensional shape data; an outermost shape extraction step of obtaining a prescribed circumscribed graphic shape circumscribing a projection shape specified by the projection shape data at each prescribed angle while changing a relative angle of the projection shape and the circumscribed graphic shape, and extracting data regarding a shape of an inside area common to each of all obtained circumscribed graphic shapes, as outermost edging shape data; and a penetrated edging shape extraction step of obtaining a differential area between a shape specified by the outermost edging shape data and the projection shape specified by the projection shape data, and extracting data regarding a shape portion of the obtained differential area as penetrated edging shape data.

## Description

### Technical Field

The present invention relates to a shape division method, a shape division program and a data processing device for three-dimensional data of a spectacle lens, and a lens data processing method, a lens edging method, a lens data processing program and a data processing device for processing the three-dimensional data of a spectacle lens.

### Description of Related Art

A spectacle lens is made by edging a circumferential edge portion of a lens, based on a circular unedged lens called an uncut lens, into a shape that can be framed into a spectacle frame (for example, see patent document 1). A dedicated edger is used for edging the spectacle lens. An edger that performs edging selectively using a plurality of types of edging tools, is known as a dedicated edger (for example, see patent document 2). By using such an edger, edging can be performed while selecting a most suitable edging tool for each edging portion of the spectacle lens, and therefore the edging can be efficiently performed, and as a result, productivity of the spectacle lens can be improved.

Further, in recent years, edging is sometimes performed for framing a lens into a high curve (with strong degree of a curve) frame mainly used as sunglasses (see patent document 3). When edging for a high curve frame is performed, most of the case is that a lens circumferential portion is edged into a complicated shape, and therefore it is effective to perform edging while selecting a most optimal edging tool for each edging portion.

### Prior Art document

### Patent document

Patent document 1: Japanese Patent Laid Open Publication No.2009-66743
Patent document 2: Japanese Patent Laid Open Publication No.2000-218487
Patent document 3: Japanese Patent Laid Open Publication No.2012-185490

### Summary of the Invention

### Problem to be solved by the Invention

Incidentally, in order to perform edging selectively using a plurality of types of edging tools, it is necessary to divide a circumferential edge shape of a spectacle lens into edging portions edged by the same edging tool, and extract this circumferential edge shape as a shape element of each edging portion. It is general to perform shape division for selecting the edging tool, while judging whether the edging portion and a selectable edging tool are matched with each other, based on an empirical rule by an operator, etc., of an edger.

However, the shape division by the operator, etc., of the edger is based on the empirical rule of the operator, etc., who performs the shape division. Therefore, the shape division is not always performed conforming to a specific reference, and it is conceivable that a division result after the shape division is required to be corrected, and a sufficient precision cannot be expected. Further, the shape division is not necessarily performed conforming to a specific reference. Therefore, much time is required depending on a procedure of the shape division. This is not efficient.

Further, in order to perform edging to the spectacle lens, as pre-processing of the edging, it is necessary to select an outer diameter size of an uncut lens which is a base, after extracting the circumferential edge shape of the spectacle lens and in consideration of an edging margin for the extracted shape. Such a shape extraction for selecting the size of the uncut lens, is generally performed based on the empirical rule by the operator, etc., of the edger that performs edging.

However, the shape extraction by the operator, etc., of the edger, is based on the empirical rule of the operator, etc., and therefore the shape extraction is not necessarily performed conforming to a specific reference, and it is conceivable to correct the extraction result after the shape extraction, and a sufficient precision cannot be expected. Accordingly, in edging the spectacle lens, the outer diameter size of the uncut lens which is a base, is required to be selected after a sufficient edging margin is secured for the extraction result. This is a factor of making it difficult to make a thin spectacle lens. Namely, in a conventional shape extraction, it is difficult to make a thinnest lens that is suitable for a final shape. Also, if the sufficient precision cannot be expected for the shape extraction, the following situation is caused: the final shape of the spectacle lens cannot be correctly formed, or a pupil distance (PD) of the spectacle lens is required to be adjusted.

Therefore, an object of the present invention is to provide a shape division method, a shape division program and a data processing device capable of performing the shape division with high precision and high efficiency, by performing the shape division conforming to a specific reference for performing edging to a spectacle lens.

Another object of the present invention is to provide a lens data processing method, a lens edging method, a lens data processing program and a data processing device, capable of making a thin spectacle lens through the shape extraction with high precision by performing the shape extraction conforming to a specific reference for performing edging to the spectacle lens.

### Means for solving the Problem

In order to achieve the above-described object, the present invention is provided.

In order to achieve the above object, inventors of the present invention study on a procedure of the edging performed to the spectacle lens. Edging performed to the spectacle lens can be efficient by edging a rough outline shape first, and subsequently edging a fine partial shape. Thus, it is found by the inventors of the present invention that regarding the shape division for the edging as well, it is preferable to extract the rough outline shape, and thereafter extract the fine partial shape.

It is also found by the inventors of the present invention as an unconventional new concept, such that regarding the rough outline shape to be extracted, it is preferable to extract an outer shape formed including the circumferential edge shape of the spectacle lens and having no a concave curve portion. This is because if the spectacle lens is formed having no concave curve portion, edging can be efficiently performed using an edging tool with a maximum diameter that can be used.

In view of this fact, it is also found by the inventors of the present invention as an unconventional new concept, such that by geometrically extracting the outer shape formed having no concave curve portion so as to comply with a previously set specific reference, it is possible to select the uncut lens with a size having a minimum edging margin secured for the extraction result, and as a result, a thinner spectacle lens can be realized.

The present invention is provided based on such a new concept by the inventors of the present invention.

According to a first aspect of the present invention, there is provided a shape division method for dividing three-dimensional shape data of a spectacle lens into data regarding a plurality of shape element portions used for edging the spectacle lens, including:
a projection shape acquisition step of acquiring data regarding a projection shape of a circumferential edge of the spectacle lens as projection shape data based on the three-dimensional shape data;
an outermost shape extraction step of obtaining a prescribed circumscribed graphic shape circumscribing a projection shape specified by the projection shape data at each prescribed angle while changing a relative angle of the projection shape and the circumscribed graphic shape, and extracting data regarding a shape of an inside area common to each of all obtained circumscribed graphic shapes, as outermost edging shape data; and
a penetrated edging shape extraction step of obtaining a differential area between a shape specified by the outermost edging shape data and the projection shape specified by the projection shape data, and extracting data regarding a shape portion of the obtained differential area as penetrated edging shape data.

According to a second aspect of the present invention, there is provided the shape division method of the first aspect, including:
an outer shape acquisition step of acquiring convex surface side shape data regarding an outer shape on a convex surface side of the spectacle lens and concave surface side shape data regarding an outer shape on an concave surface side of the spectacle lens, from the three-dimensional shape data prior to the projection shape acquisition step: and
a non-penetrated edging shape extraction step of obtaining a differential area between a projection shape specified by the projection shape data and a convex surface side shape specified by the convex surface side shape data, and extracting data regarding a shape portion of the obtained differential area as convex surface side edging shape data, and obtaining a differential area between a projection shape specified by the projection shape data and a concave surface side shape specified by the concave surface side shape data, and extracting data regarding a shape portion of the obtained differential area as concave surface side edging shape data,
wherein in the projection shape acquisition step, the projection shape data is acquired by synthesizing the convex surface side outer shape specified by the convex surface side shape data and the concave surface side outer shape specified by the concave surface side shape data.

According to a third aspect of the present invention, there is provided a shape division program for causing a computer that processes three-dimensional shape data of a spectacle lens to execute:
an outer shape acquisition step of acquiring a convex surface side shape data regarding an outer shape on a convex surface side of the spectacle lens and concave surface side shape data regarding an outer shape on a concave surface side of the spectacle lens, from three-dimensional shape data
a projection shape acquisition step of acquiring data regarding a projection shape obtained by synthesizing the convex surface side outer shape based on the convex surface side shaped data and the concave surface side outer shape based on the concave surface side shape data, as projection shape data;
an outermost shape extraction step of obtaining a prescribed circumscribed graphic shape circumscribing the projection shape specified by the projection shape data at each prescribed angle while changing a relative angle of the projection shape and the circumscribed graphic shape, and extracting data regarding a shape of an inside area common to each of all obtained circumscribed graphic shapes, as outermost edging shape data
a penetrated edging shape extraction step of obtaining a differential area between an outer shape specified by the outermost edging shape data and the projection shape specified by the projection shape data, and extracting data regarding a shape portion of the obtained differential area as penetrated edging shape data; and
a non-penetrated edging shape extraction step of obtaining a differential area between a projection shape specified by the projection shape data and a convex surface side shape specified by the convex surface side shape data, and extracting data regarding a shape portion of the obtained differential area as convex surface side edging shape data, and obtaining a differential area between a projection shape specified by the projection shape data and a concave surface side shape specified by the concave surface side shape data, and extracting data regarding a shape portion of the obtained differential area as concave surface side edging shape data.

According to a fourth aspect of the present invention, there is provided a data processing device, configured including a computer that executes the shape division program described in the third aspect.

According to a fifth aspect of the present invention, there is provided a lens data processing method, including:
a projection shape acquisition step of acquiring data regarding a projection shape of a circumferential edge of a spectacle lens based on three-dimensional shape data of the spectacle lens;
an outermost shape extraction step of obtaining a prescribed circumscribed graphic shape circumscribing the projection shape specified by the projection shape data at each prescribed angle while changing a relative angle of the projection shape and the circumscribed graphic shape, and extracting data regarding a shape of an inside area common to each of all obtained circumscribed graphic shapes, as outermost edging shape data; and
a size determination step of determining an outer size of an uncut lens which is a base of the spectacle lens, based on the outermost edging shape data.

According to a sixth aspect of the present invention, there is provided a lens edging method, including:
an edging step of performing edging to an uncut lens having an outer size determined by the lens data processing method described in the fifth aspect.

According to a seventh aspect of the present invention, there is provided a lens data processing program for causing a computer that processes three-dimensional data of a spectacle lens, to execute:
a projection shape acquisition step of acquiring data regarding a projection shape of a circumferential edge of the spectacle lens based on the three-dimensional shape data, as projection shape data;
an outermost shape extraction step of obtaining a prescribed circumscribed graphic shape circumscribing the projection shape specified by the projection shape data at each prescribed angle while changing a relative angle of the projection shape and the circumscribed graphic shape, and extracting data regarding a shape of an inside area common to each of all obtained circumscribed graphic shapes, as outermost edging shape data; and
a size determination step of determining an outer size of an uncut lens which is a base of the spectacle lens, based on the outermost edging shape data.

According to an eighth aspect of the present invention, there is provided a data processing device, configured including a computer that executes the shape division program described in the seventh aspect. Advantage of the Invention

According to the present invention, the shape division for edging the spectacle lens, can be performed conforming to a previously set specific reference. Therefore, high precision and high efficiency, etc., of the shape division can be achieved.

Also, according to the present invention, the shape extraction for performing edging to the spectacle lens, can be performed conforming to a previously set specific reference. Therefore, the spectacle lens can be made thinner through such a high precision of the shape division.

### Brief description of the drawings

FIG. 1 is a block diagram showing a schematic constitutional example of an overall lens edging system according to an embodiment of the present invention.
FIG. 2 is a block diagram showing an example of a functional structure in the lens edging system according to an embodiment of the present invention.
FIG. 3 is a flowchart showing an outline of a procedure of a processing operation by the lens edging system according to an embodiment of the present invention.
FIG. 4 is a flowchart (No.1) showing a procedure of a shape division processing according to an embodiment of the present invention.
FIG. 5 is a flowchart (No.2) showing a procedure of a shape division processing according to an embodiment of the present invention.
FIG. 6 is an explanatory view (No.1) showing a specific example of a processing content of the shape division processing according to an embodiment of the present invention.
FIG. 7 is an explanatory view (No.2) showing a specific example of a processing content of the shape division processing according to an embodiment of the present invention.
FIG. 8 is an explanatory view (No.3) showing a specific example of a processing content of the shape division processing according to an embodiment of the present invention.
FIG. 9 is an explanatory view (No.4) showing a specific example of a processing content of the shape division processing according to an embodiment of the present invention.
FIG. 10 is a flowchart showing a procedure of an outer size determination processing according to an embodiment of the present invention.
FIG. 11 is an explanatory view showing a specific example of a result of the outer size determination processing in a case of a special order lens according to an embodiment of the present invention.
FIG. 12 is an explanatory view showing a specific example of an extraction result of a conventional edged outermost shape.
FIG. 13 is a flowchart showing an outline of a procedure of an edging tool allocation processing according to an embodiment of the present invention.
FIG. 14 is a flowchart showing a procedure of an outer layer rough edging condition preparation processing according to an embodiment of the present invention.
FIG. 15 is a flowchart showing a procedure of an outer layer finish edging condition preparation processing according to an embodiment of the present invention.
FIG. 16 is a flowchart showing a procedure of an edging condition preparation processing for the projection edging layer according to an embodiment of the present invention.
FIG. 17 is a flowchart showing a procedure of a convex surface layer edging condition preparation processing according to an embodiment of the present invention.
FIG. 18 is a flowchart showing a procedure of a concave surface layer edging order determination processing according to an embodiment of the present invention.
FIG. 19 is a flowchart (No.1) showing a procedure of each layer edging order determination processing according to an embodiment of the present invention.
FIG. 20 is a flowchart (No.2) showing a procedure of each layer edging order determination processing according to an embodiment of the present invention.
FIG. 21 is an explanatory view showing a specific example of a processing content of a lens edging according to an embodiment of the present invention.

### Detailed description of the Invention

An embodiment of the present invention will be described hereafter, based on the drawings.

This embodiment will be described as itemized in the following order.
1. A schematic structure of an overall lens edging system
2. Functional structure in the lens edging system
3. An example of a processing operation in the lens edging system
   3-1. Outline of a processing operation
   3-2. Procedure of a shape division processing
   3-3. Procedure of an outer size determination processing
   3-4. Procedure of an edging tool allocation processing
   3-5. Procedure of a lens edging
4. Effect of this embodiment
5. Modified example, etc.

### < 1. A schematic structure of an overall lens edging system>

A schematic structure of an overall lens edging system will be described first.

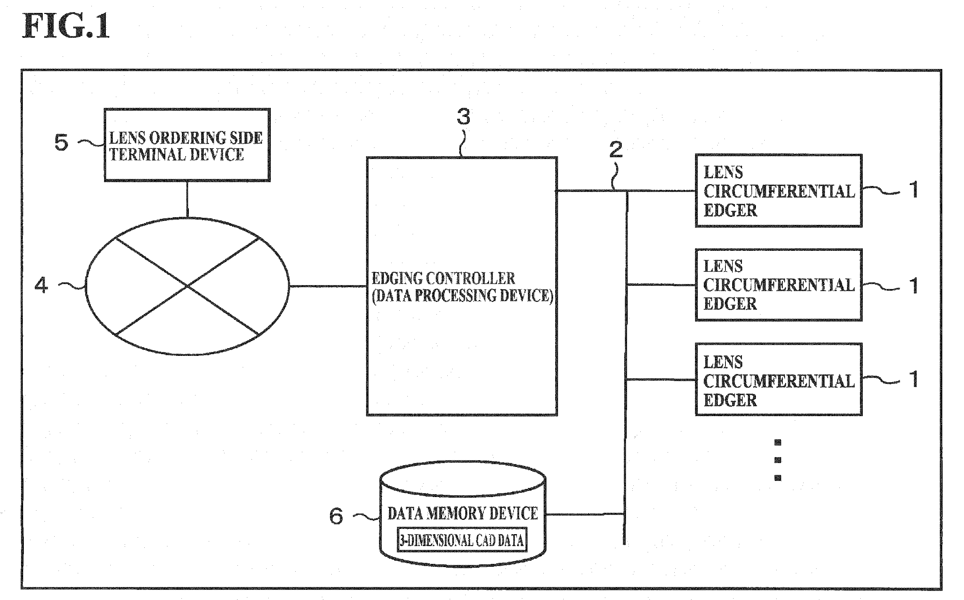

FIG. 1 is a block diagram showing a schematic constitutional example of the overall lens edging system according to this embodiment.

The lens edging system is the system of edging a circumferential edge portion of a spectacle lens so as to be framed into a spectacle frame.

Therefore, the lens edging system includes a plurality of lens circumferential edgers 1. Each lens circumferential edger 1 has a function of performing edging to the spectacle lens. Edging is performed to an uncut lens (unedged lens) having a prescribed outer shape (for example, a circular shape). By performing edging, the circumferential edge portion of the uncut lens is edged into a shape that can be framed into a spectacle frame. Such an edging is performed by the lens circumferential edger 1 selectively using a plurality of types of edging tools. For example, this embodiment shows a case of including a plurality of lens circumferential edgers to improve productivity of the edging of the spectacle lens. However, at least one lens circumferential edger 1 may be sufficient in the system.

Each lens circumferential edger 1 is connected to an edging controller 3 via a communication line 2 such as LAN (Local Area Network). However, the edging controller 3 may be integrally formed with the lens circumferential edger 1 and is not required to be a separate body by LAN connection, etc.

The edging controller 3 is constituted of a computer device including CPU (Central Processing Unit), RAM (Random Access Memory). ROM (Read Only Memory), and communication I/F (interface) part, etc., and configured to perform processing required for performing edging by each lens circumferential edger 1. Various processing can be given as the processing required for the edging. However, as an example of the processing, there is a processing of creating edging data for performing edging operation by the lens circumferential edger 1 based on the data for specifying a lens shape after edging. The edging controller 3 that performs such a data processing is called a "data processing device" hereafter.

A lens ordering side terminal device 5 is connected to the edging controller (data processing device) 3, via a broad communication line network 4 such as an Internet.

The lens ordering side terminal device 5 is composed of a terminal device such as a personal computer, etc., installed at a spectacle shop for example, and is configured to give an order to the lens circumferential edger 1 connected thereto. By this order, order information is transmitted from the lens ordering side terminal device 5. The order information includes a frame model number of a spectacle frame into which a spectacle lens is framed, prescription data for specifying a prescription value of the spectacle lens, lens information for specifying a maker or a material, etc., of the spectacle lens, and other each kind of information. Such order information is treated as order-reception information when it is received at the data processing device 3 side.

Further, a data memory device 6 is connected to the data processing device 3 via a communication line 2.

The data memory device 6 is composed of a large-capacity memory device such as HDD (Hard Disk Drive), etc., and is configured to store and hold data required for data processing by the data processing device 3. Various data such as order-reception information received from the lens ordering side terminal device 5, can be given as the data required for the data processing by the data processing device 3. However, as an example of the data, three-dimensional CAD (Computer Aided Design) data for specifying a three-dimensional lens shape after edging can be given. The data memory device 6 is not required to exist on the communication line 2 but may exist on the broad communication line network 4, if it can be accessed by the data processing device 3.

### <2. Functional structure in the lens edging system>

A functional structure in the lens edging system having the abovementioned structure, will be described next.

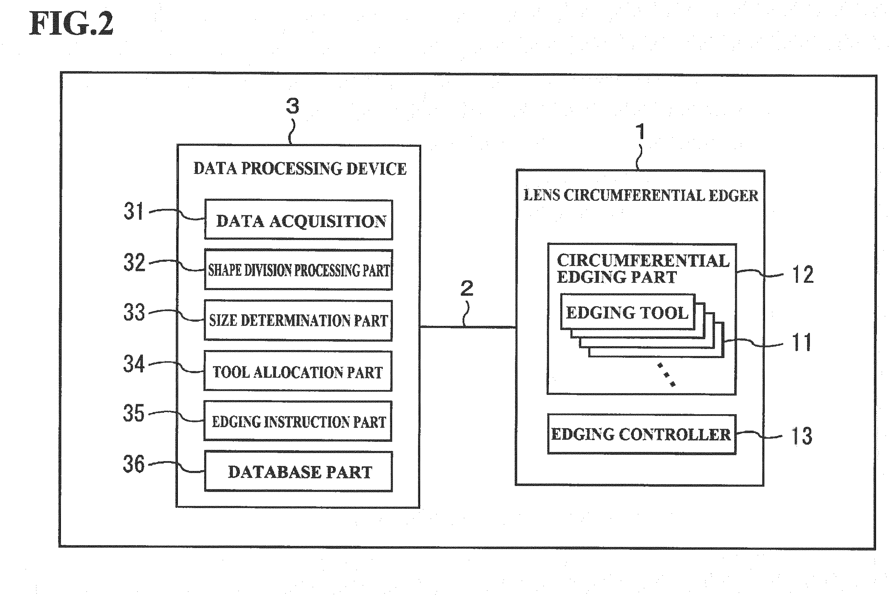

FIG. 2 is a block diagram showing an example of the functional structure in the lens edging system according to this embodiment.

### (Lens circumferential edger)

The lens circumferential edger 1 constituting the lens edging system has a function as a circumferential edging part 12 for performing edging to a spectacle lens selectively using a plurality of types of edging tools 11, and as an edging controller 13 for controlling an edging operation by the circumferential edging part 12. These circumferential edger 12 and edging controller 13 may be constituted using a publicly-known technique, and explanation for details thereof is omitted here.

### (Data processing device)

The data processing device 3 connected to such a lens circumferential edger 1, has the following functional structure. Namely, the data processing device 3 is constituted of a data acquisition part 31, a shape division processing part 32, a size determination part 33, a tool allocation part 34, an edging instruction part 35, and a database part 36.

The data acquisition part 31 is configured to acquire data required for the data processing by the data processing device 3. Specifically, as one of the required data, for example, three-dimensional CAD data for specifying the lens shape after edging regarding the spectacle lens to be edged by the lens circumferential edger 1, is read and acquired from the data memory device 6. The data acquisition part 31 may acquire further other data, in addition to the three-dimensional CAD data.

The shape division processing part 32 is configured to divide an edging portion to be edged during edging of the spectacle lens, into a plurality of shape element portions, based on the three-dimensional CAD data of the spectacle lens acquired by the data acquisition part 31, to perform edging to the spectacle lens selectively using a plurality of types of edging tools 11 by the lens circumferential edger 1. The "shape element portion" called here, refers to a portion of a shape to be edged by the same tool, out of the shape elements constituting the edging portions on the circumferential edge of the spectacle lens. Details of the specific example of this shape element portion will be descried later.

The size determination part 33 is configured to determine an outer size of the uncut lens (unedged lens) to be edged by the lens circumferential edger 1, based on a result of the shape division by the shape division processing part 32.

The tool allocation part 34 is configured to allocate the edging tool 11 used for edging each shape element portion regarding each of a plurality of shape element portions divided by the shape division processing part 32, in accordance with a previously set tool selection reference. Further, the tool allocation part 34 is configured to determine a using order of each edging tool 11 allocated to each of the plurality of shape element portions, in accordance with a previously set using priority order. Details of the previously set tool selection reference and the using priority order will be described later.

The edging instruction part 35 is configured to make the lens circumferential edger 1 perform edging to the spectacle lens by giving an edging instruction to the lens circumferential edger 1. At this time, the edging instruction is given so that each edging tool 11 allocated by the tool allocation part 34 is used for the uncut lens having the outer size determined by the size determination part 33, in the using order determined by this tool allocation part 34.

The database part 36 is configured to store and hold data, etc., by registering the data required for the processing by each of the abovementioned parts 31 to 35 or the data, etc., obtained by this processing. Details of the specific example of the data registered by the database part 36 will be described later. A prescribed memory area used by the database part 36 may be constructed in the data processing device 3 or may be constructed in the data memory device 6.

### (Program)

Each of the parts 31 to 36 in the data processing device 3 is realized by executing a prescribed software program by the data processing device 3 having a function as a computer device. In this case, a prescribed software program is used by being installed on the data processing device 3. However, prior to such an installment, the software program may be provided through the broad communication line network 4 connected to the data processing device 3, or may be provided by being stored in a computer readable recording medium that can be read by the data processing device 3.

### <3. An example of a processing operation in the lens edging system>

An example of a processing operation in the lens edging system will be described next.

### [3-1. Outline of the processing operation]

An outline of a procedure of the processing operation by the lens edging system will be described first.

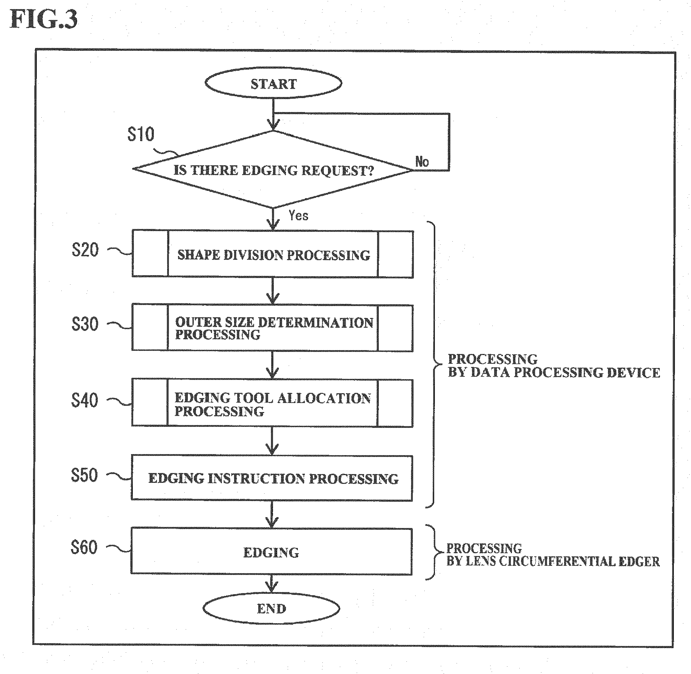

FIG. 3 is a flowchart showing an outline of a procedure of the processing operation by the lens edging system of this embodiment.

In the lens edging system having the abovementioned structure, when there is a request from the lens ordering side terminal device 5 to perform edging to the spectacle lens (S10), the data processing device 3 receives the edging request and manages it as a job. Then, regarding the requested job, the data processing device 3 performs shape division processing (S20) and outer size determination processing (S30), and details thereof are described later. In the outer size determination processing (S30), an optimal lens selection, etc., is performed based on an instruction from the lens information from the lens ordering terminal device 5 whether or not a lens is a special order lens or a stock lens. Thereafter, the data processing device 3 performs edging tool allocation processing (S40) details of which are described later, and thereafter performs edging instruction processing (S50) for giving an instruction of edging the spectacle lens, to the lens circumferential edger 1 that executes the job for the uncut lens selected by the outer size determination processing (S30). When there is such an edging instruction from the data processing device 3, the lens circumferential edger 1 that receives such an edging instruction, performs edging to the uncut lens set in the lens circumferential edger 1 selectively using a plurality of types of edging tools 11, in accordance with the instructed content (S60).

Detailed explanation is given hereafter, for the shape division processing (S20), the outer size determination processing (S30), and the edging tool allocation processing (S40) performed by the data processing device 3, out of the abovementioned series of procedures.

### [3-2. Procedure of a shape division processing]

The shape division processing (S20) performed by the data processing device 3 will be described first.

Regarding the spectacle lens which is requested to be edged, the shape division processing (S20) is the processing mainly performed by the shape division processing part 32 of the data processing device 3, which is the processing for dividing the three-dimensional CAD data for specifying the lens shape after edging of the spectacle lens, into the data regarding a plurality of shape element portions used for the edging. The shape division processing part 32 performs such a shape division processing (S20) conforming to a previously set specific reference (specifically a previously programmed division rule) as described hereafter.

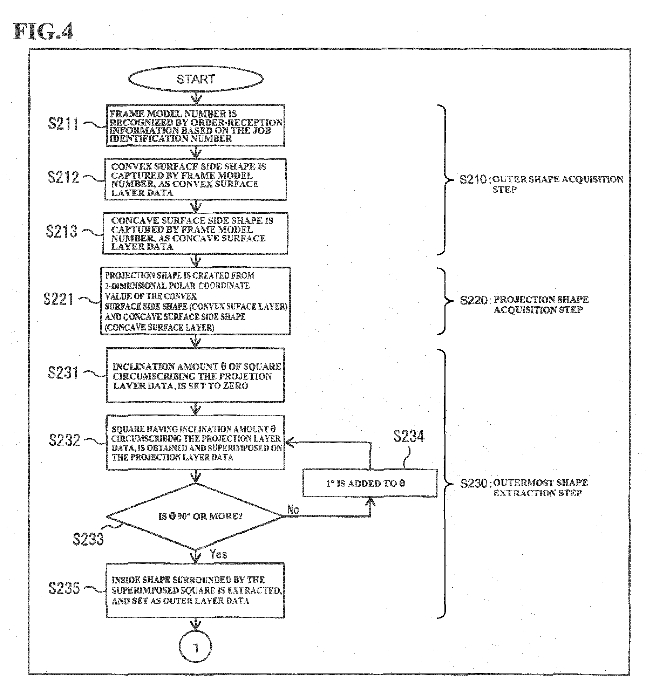

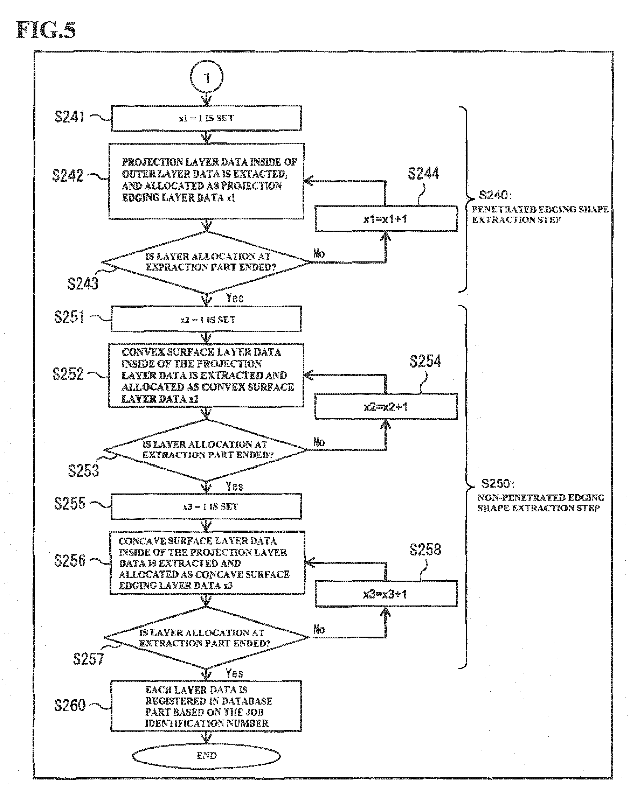

FIG. 4 and FIG. 5 are flowcharts showing a procedure of the shape division processing according to this embodiment.

As shown in the figure, the shape division processing (S20) is performed sequentially through the steps roughly divided into an outer shape acquisition step (S210), a projection shape acquisition step (S220), an outermost shape extraction step (S230), a penetrated edging shape extraction step (S240), and a non-penetrated edging shape extraction step (S250).

### (Outer shape acquisition step)

In the outer shape acquisition step (S210), first, the shape division processing part 32 recognizes a frame model number of the spectacle frame into which the spectacle frame to be edged by this job is framed (S211). This frame model number is included in the order-reception information from the lens ordering side terminal device 5. Then, the shape division processing part 32 reads from the data memory device 6, the data regarding the outer shape of the spectacle lens processed into a state fitted into a frame, out of the three-dimensional CAD data stored and held therein corresponding to the recognized frame model number. At this time, the shape division processing part 32 acquires the three-dimensional CAD data regarding the outer shape on the convex surface side of the spectacle lens, as the convex surface side shape data (S212), and acquires the three-dimensional CAD data regarding the outer shape on the concave surface side of the spectacle lens as the concave surface side shape data (S213). Each of these acquired data is managed as the data of different layers respectively. The convex surface side shape data is called a "convex surface layer data", and its management layer is called a "convex surface layer" hereafter. Also, the concave surface side shape data is called a "concave surface layer data", and its management layer is called a "concave surface layer" hereafter.

### (Projection shape acquisition step)

In the projection shape acquisition step (S220) performed next to the outer shape acquisition step (S210), the shape division processing part 32 acquires the data regarding the projection shape of the circumferential edge of the spectacle lens as the projection shape data (S221) by synthesizing the convex surface side outer shape specified by the convex surface layer data acquired in the outer shape acquisition step (S210), and the concave surface side outer shape specified by the concave surface layer data acquired in the outer shape acquisition step (S210). At this time, the shape division processing part 32 creates the projection shape from two-dimensional coordinate values of the convex surface layer and the concave surface layer, and its creation result is set as the projection shape data. This projection shape data is also managed as the data of a different layer from the convex surface layer and the concave surface layer. The projection shape data is called "projection layer data", and its management layer is called a "projection layer" hereafter.

### (Outermost shape extraction step)

In the outermost shape extraction step (S230) performed next to the projection shape acquisition step (S220), the shape division processing part 32 extracts the outer shape including a circumferential shape of the spectacle lens, and without a concave curve portion, based on the projection layer data acquired in the projection shape acquisition step (S220). The reason for extracting such an outer shape is as follows: if the outer shape is formed without the concave curve portion, efficient edging can be performed using the edging tool 11 having a maximum diameter that can be used by the lens circumferential edger 1, during edging performed thereafter.

Regarding the outermost shape extraction step (S230), the shape division processing part 32 geometrically performs extraction of the outer shape having no concave curve portion, conforming to a previously set specific reference. Specifically, the outer shape is extracted using a prescribed circumscribed graphic shape circumscribing the projection shape specified by the projection shape data. As the circumscribed graphic shape used at this time, for example square (especially rectangular in which four corners are all equal) is conceivable. In a case of the rectangular square, the circumscribed graphic shape can be easily obtained by a technique of recognizing a maximum value and a minimum value of the coordinate values constituting the projection shape. Namely, the shape division processing part 32 geometrically performs the extraction of the outer shape having no concave curve portion, while using the square circumscribing the projection shape.

In order to extract the outer shape using the circumscribed square, first, the shape division processing part 32 sets an inclination amount θ of the square to 0° to be circumscribed to the projection shape (S231). Here, the inclination amount θ refers to a rotation amount of the circumscribed square with a pole of two-dimensional polar coordinates as a center. The inclination amount "0°" refers to a state in which opposing two sides are parallel to each other and other two sides are perpendicular to each other in the rectangular, with respect to a coordinate axis of the two-dimensional polar coordinate, when the circumscribed square is the rectangular. Then, the circumscribed square with such an inclination amount θ is obtained, and this circumscribed square is superimposed on the projection shape on the projection layer (S232). Thereafter, the shape division processing part 32 judges whether or not the set inclination amount θ is 90° or more (S233), and if it is less than 90°, a prescribed angle is added to the inclination amount θ (S234). Although the added prescribed angle may be suitably set, 1° can be considered for example. Then, the shape division processing part 32 obtains the circumscribed square having the inclination amount θ after addition of the prescribed angle, and superimposes this circumscribed square on the projection shape on the projection layer (S232). This process is repeated until the inclination amount θ becomes 90° or more (S232 to S234). Thus, each circumscribed square for the projection shape is obtained at every 1° from the case of 0° to 89° of the inclination amount θ. That is, the shape division processing part 32 obtains the square which is a prescribed circumscribed graphic shape to be circumscribed to the projection shape specified by the projection layer data, at every prescribed angle (for example, 1 °) while changing a relative angle of the projection shape and the square. A relative angle displacement at every prescribed angle may be performed over the whole circumference (namely, 360°). However, when the prescribed circumscribed graphic shape is the square, a similar result can be obtained as the case of performing the relative angle displacement over the whole circumference. Therefore, in this embodiment, the relative angle displacement is ended at a point when the inclination amount θ is 90° or more.

When each circumscribed square at every prescribed angle is thus obtained, subsequently, the shape division processing part 32 extracts a shape of an inside area common to all of the circumscribed squares. Namely, the shape division processing part 32 extracts the shape of the inside area surrounded by each circumscribed square superimposed on the projection shape on the projection layer. Then, the shape division processing part 32 extracts the data regarding the shape of the inside area extracted on the outer layer, as the outermost edging shape data (S235). The outermost edging shape data is also managed as the data of the different layer from the convex surface layer, the concave surface layer, and the projection layer. The outermost edging shape data is called "outer layer data", and its management layer is called an "outer layer" hereafter. The edged outermost shape specified by this outer layer data, corresponds to the outer shape having no concave curve portion.

Through these procedures, in the outermost shape extraction step (S230), the edged outermost shape specified by the outer layer data, is geometrically extracted from the projection shape specified by the projection layer data, while using the square circumscribed to the projection shape. When extracting the edged outermost shape, either one of the projection shape and the circumscribed square may be displaced, if the mutual relative angle is changed.

### (Penetrated edging shape extraction step)

In the penetrated edging shape extraction step (S240) performed next to the outermost shape extraction step (S230), the shape division processing part 32 obtains a differential area between the edged outermost shape specified by the outer layer data extracted in the outermost shape extraction step (S230), and the projection shape specified by the projection layer data acquired in the projection shape acquisition step (S220), and extracts the data regarding the shape portion of the obtained differential area, as the penetrated edging shape data. At this time, when there are a plurality of differential areas at distant positions, the shape division processing part 32 extracts data regarding each differential area individually, as the penetrated edging shape data.

Therefore, first, the shape division processing part 32 sets the variable x1, as x1 = 1, for identifying each differential area (S241), and extracts the shape portion in which a contour of the projection shape specified by the projection layer data is positioned more inside than a contour of the edged outermost shape specified by the outer layer data, and allocates the value of the set variable x1 to the extracted shape portion (S242). Namely, the shape division processing part 32 extracts the extracted shape portion, as the penetrated edging shape data specified by the variable (identification information) x1. Thus, the shape portion to be subjected to penetration processing passing through front and rear surfaces of the lens, is allocated to the variable x1.

When such an extraction and allocation are performed, the shape division processing part 32 judges whether or not the processing for the whole differential area is ended (S243), and when there is an unprocessed differential area, increments x1, as x1 = x1 + 1 (S244), and thereafter performs the abovementioned extraction and allocation processing again (S242). Then, the abovementioned processing is repeated until the processing for the whole differential area is ended (S242 to S243).

Through these procedures, in the penetrated edging shape extraction step (S240), the edging portions for forming the edged outermost shape (namely outer shape having no concave curve portion) into the projection shape, are extracted as the penetrated edging shape portions to be edged, which are passing through the front and rear surfaces of the lens, and even if the edging portions exist at distant positions, they are individually extracted.

Each penetrated edging shape data thus extracted as well, is managed as the data of a different layer from the abovementioned each layer. The penetrated edging shape data is called "projection edging layer data", and its management layer is called a "projection edging layer" hereafter. In a case of extracting a plurality of differential areas individually, a plurality of projection edging layer data are present, corresponding to each projection edging layer data.

### (Non-penetrated edging shape extraction step)

In the non-penetrated edging shape extraction step (S250) performed next to the penetrated edging shape extraction step (S240), the shape division processing part 32 obtains the differential area between the projection shape specified by the projection layer data acquired in the projection shape acquisition step (S220), and the convex surface side edging shape specified by the convex surface layer data acquired in the outer shape acquisition step (S210), and extracts the data regarding the shape portion of the obtained differential area, as the convex surface side edging shape data. At this time, when there a plurality of differential areas at distant positions, the shape division processing part 32 extracts data regarding each differential area, as the convex surface side edging shape data.

Further, in the non-penetrated edging shape extraction step (S250), the shape division processing part 32 obtains the differential area between the projection shape specified by the projection layer data acquired in the projection shape acquisition step (S220), and the concave surface side outer shape specified by the concave surface layer data acquired in the outer shape acquisition step (Ss210), and extracts the data regarding the shape portion of the obtained differential area as the concave surface edging shape data. At this time, on the concave surface side as well similarly to the convex surface side, the shape division processing part 32 extracts the data regarding each differential area individually, when there are a plurality of differential areas at distant positions, as the concave surface side edging shape data.

Therefore, the shape division processing part 32 sets the variable x2, as x2 = 1 for identifying each differential area on the convex surface side (S251), and extracts the data regarding the shape portion in which a contour of the convex surface side outer shape specified by the convex surface layer data is positioned more inside than a contour of the projection shape specified by the projection layer, and allocates the value of the variable x2 to the extracted shape portion (S252). Namely, the shape division processing part 32 extracts the shape portion as the convex surface side edging shape data specified by the variable (identification information) x2. Thus, regarding variable x2, edging should be performed from the lens convex surface side. However, variable x2 is allocated to the shape portion so that the edging is not passed through the concave surface side (non-penetrated edging).

When such an extraction and allocation are performed, the shape division processing part 32 judges whether or not the processing regarding the whole differential area is ended (S253), and when there is an unprocessed differential area, increments x2, as x2 = x1 + 1 (S254), and thereafter performs the abovementioned extraction and allocation processing again (S252). Then, the abovementioned processing is repeated until the processing for the whole differential area is ended (S252 to S254).

Through these procedures, in the non-penetrated edging shape extraction step (S250), the edging portions for forming the convex surface side of the projection shape into the convex surface side outer shape, are extracted as the convex surface side non-penetrated edging shape portion, which are not passing through the concave surface side, although edging should be performed from the lens convex surface side, and if there are the edging portions at distant positions, they are respectively individually extracted.

Each convex surface side edging shape data thus extracted is also managed as the data of a different layer from the abovementioned each layer. Hereafter, the convex surface edging shape data is called "convex surface edging layer data", and its management layer is called a "convex surface edging layer". When a plurality of edging portions are individually extracted, there are a plurality of convex surface edging layer data, corresponding to each edging portion.

Further, the shape division processing part 32 sets the variable x3, as x3 = 1, for identifying each differential area on the concave surface side (S255). Then, the shape division processing part 32 extracts the shape portion in which a contour of the concave surface side outer shape specified by the concave surface layer data is positioned more inside than a contour of the projection shape specified by the projection layer data, and allocates the value of the variable x3 to the extracted shape portion (S256). Namely, the shape division processing part 32 extracts the extracted shape portion as the concave surface side edging shape data specified by the variable (identification information) x3. Thus, regarding variable x3, edging should be performed from the lens concave surface side. However, variable x3 is allocated to the shape portion so that the edging is not passed through the concave surface side (non-penetrated edging).

When such an extraction and allocation are performed, the shape division processing part 32 judges whether or not the processing regarding the whole differential area is ended (S257), and when there is an unprocessed differential area, increments x3, as x3 = x1 + 1 (S258), and thereafter performs the abovementioned extraction and allocation processing again (S256). Then, the abovementioned processing is repeated until the processing for the whole differential area is ended (S256 to S258).

Through these procedures, in the penetrated edging shape extraction step (S250), the edging portion for forming the concave surface side of the projection shape into the concave surface side outer shape, is extracted as a concave surface side non-penetrated shape portion not passing through the convex surface side of the lens, although edging should be performed from the lens concave surface side, and if there are the edging portions at distant positions, each of them is extracted individually.

Each concave surface side edging shape data thus extracted is also managed as the data of a different layer from the abovementioned each layer. Hereafter, the concave surface side edging shape data is called "concave surface edging layer data", and its management layer is called a "concave surface edging layer". In a case of extracting a plurality of edging portions individually, a plurality of concave surface edging layer data are present, corresponding to each edging portion.

In the non-penetrated edging shape extraction step (S250), whichever extractions of the extraction of the convex surface layer data (S251 to S254) and the extraction of the concave surface edging layer data (S255 to S258) may be selected to be first for the shape division processing part 32 to perform, or both extractions may be performed in parallel to each other.

In the processing from the outer shape acquisition step (S210) to the non-penetrated edging shape extraction step (S250), the acquired or extracted data of each layer is registered in the database part 36 by the shape division processing part 32 in a state of corresponding to identification numbers of the job, every time such acquisition or extraction is performed, and stored and held in the database part 36 (S260).

### (Specific example)

Explanation is given here for the shape division processing (S20) performed by the abovementioned series of procedures.

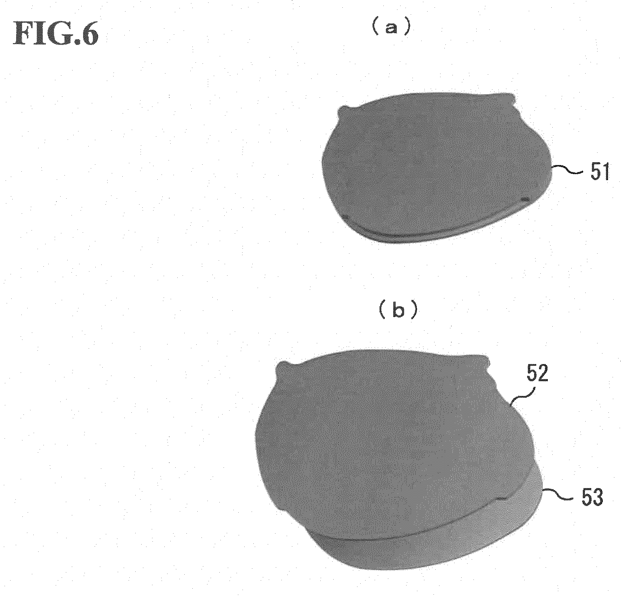

FIG. 6 to FIG. 9 are explanatory views showing specific examples of the processing content of the shape division processing according to this embodiment.

When the shape division processing (S20) is performed, first, the shape division processing part 32 reads the three-dimensional CAD data for specifying a three-dimensional lens shape 51 of the spectacle lens in the outer shape acquisition step (S210) (see FIG. 6(a)). The three-dimensional CAD data is constituted of the convex surface layer data for specifying a convex surface side outer shape 52, and the concave surface layer data for specifying a concave surface side outer shape 53 (see FIG. 6(b)). Accordingly, when the three-dimensional CAD data is read, the shape division processing part 32 acquires the convex surface layer data and the concave surface layer data.

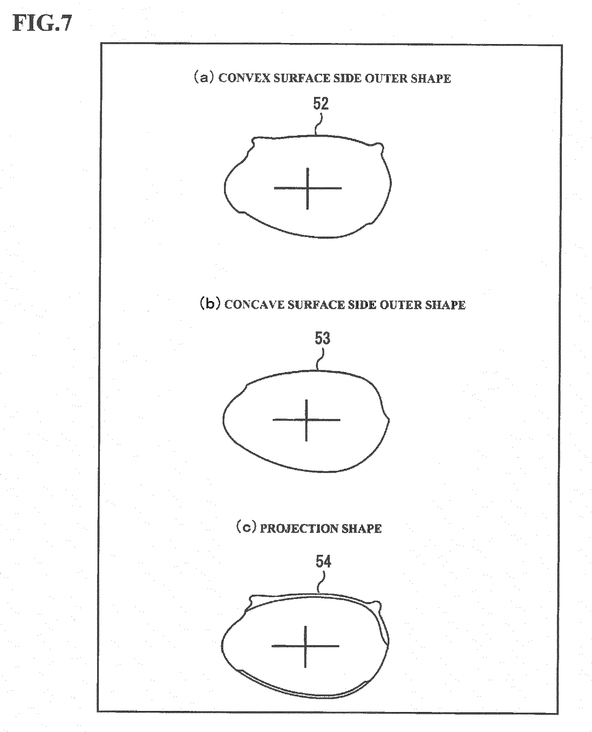

When the convex surface layer data and the concave surface layer data are acquired, subsequently, the shape division processing part 32 acquires the projection layer data in the projection shape acquisition step (S220). Specifically, the projection layer data regarding the projection shape 54 of the circumferential edge of the spectacle lens is acquired (FIG. 7(c)), by synthesizing the convex surface side outer shape 52 specified by the convex surface layer data (see FIG. 7(a)), and the concave surface side outer shape 53 specified by the concave surface layer data (see FIG. 7(b)).

When the projection layer data is acquired, subsequently, the shape division processing part 32 extracts the outer layer data in the outermost extraction step (S230).

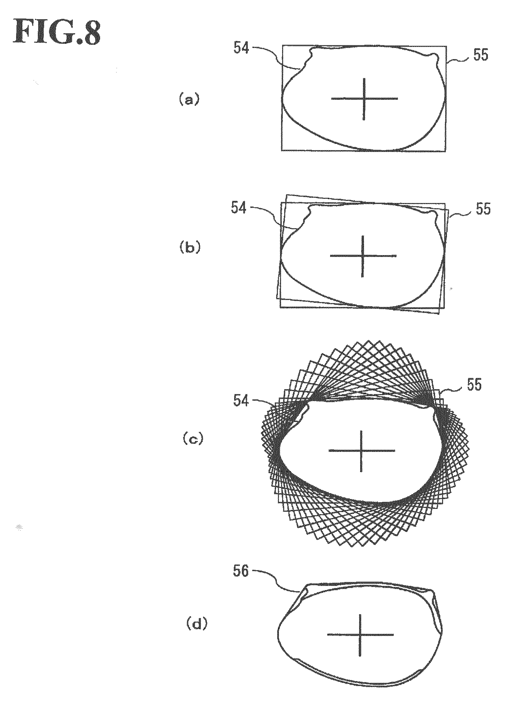

When the outer layer data is extracted, first, the shape division processing part 32 obtains a circumscribed square 55 with an inclination amount θ set to 0° to be superimposed on the projection shape 54 on the circumferential edge of the spectacle lens, and superimposes the circumscribed square 55 on the projection shape 54 on the projection layer (see FIG. 8(a)). Further, the shape division processing part 32 adds a prescribed angle to the set inclination amount 0, and thereafter obtains the circumscribed square 55 with an inclination amount θ after addition of the prescribed angle, and superimposes this circumscribed square 55 on the projection shape 54 on the projection layer (see FIG. 8(b)). This is repeated until the inclination amount θ becomes 90° or more. Namely, the shape division processing part 32 obtains the circumscribed square 55 to be superimposed on the projection shape 54 specified by the projection layer data, at every prescribed angle, while changing the relative angle of the projection shape 54 and the circumscribed square 55 (see FIG. 8(c)). The prescribed angle while changing the relative angle of the projection shape 54 and the circumscribed square 55, is considered to be 1 °, and in an example of the figure, the relative angle is changed at every 5° for simplifying the figure.

Then, when each circumscribed square 55 is obtained at every prescribed angle over at least 1/4 circumference (see F8G. 8(c)), thereafter, the shape division processing part 32 extracts the shape of the inside area common to all of the circumscribed squares 55, namely, the shape of the inside area surrounded by each circumscribed square 55 superimposed on the projection shape 54, as the edged outermost shape 56 (see FIG. 8(d)). The data for specifying this edging outermost outer shape 56 is the outer layer data.

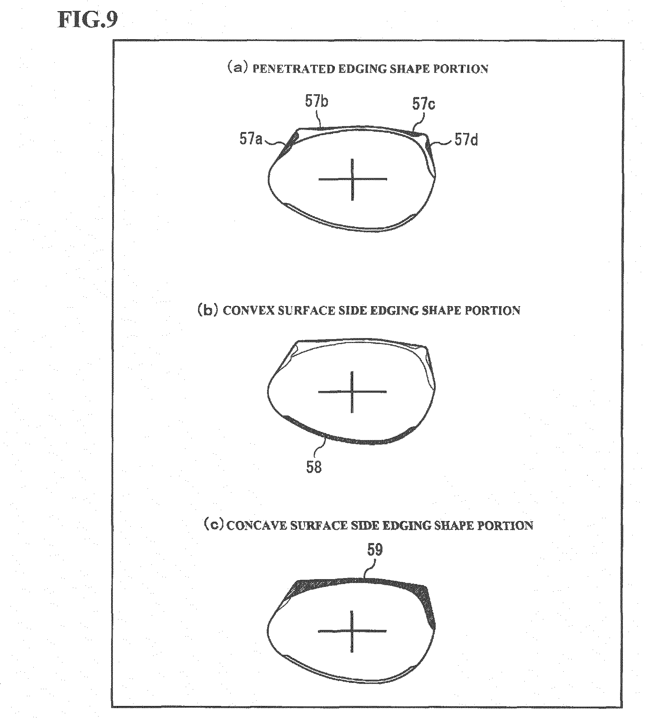

When the outer layer data is extracted, subsequently, the shape division processing part 32 extracts the projection edging layer data in the penetrated edging shape extraction step (S240). Specifically, penetrated edging shape portions 57a to 57d are obtained, which are differential areas between the edged outermost shape 56 specified by the outer layer data, and the projection shape 54 specified by the projection layer data, and the data regarding this penetrated projection shape portions 57a to 57d is set as the projection edging layer data (see FIG. 9(a)). In the example of the figure, four penetrated edging shape portions 57a to 57d that exist at distant positions are respectively extracted individually (see hatching portion in the figure).

When the projection edging layer data is extracted, thereafter, the shape division processing part 32 extracts the convex surface layer data and the concave surface edging layer data in the non-penetrated edging shape extraction step (S250).

Regarding the convex surface edging layer data, the convex surface side non-penetrated edging shape portion 58, which is the differential area between the projection shape 54 specified by the projection layer data, and the convex surface side outer shape 52 specified by the convex surface layer data, is obtained, and the data regarding this convex surface side non-penetrated edging shape portion 58 is set as the convex surface side edging shape data (see FIG. 9(b)). The figure shows a case that one convex surface side non-penetrated edging shape portion 58 is extracted (see the hatching portion in the figure).

Also, regarding the concave surface edging layer data, the concave surface side non-penetrated edging shape portion 59, which is the differential area between the projection shape 54 specified by the projection layer data, and the concave surface side outer shape 53 specified by the concave surface layer data, is obtained, and the data regarding this concave surface side non-penetrated edging shape portion 59 is set as the concave surface side edging shape data (see FIG. 9 (c)). The figure shows a case that one concave surface side non-penetrated edging shape portion 59 is extracted (see hatching portion in the figure).

By the shape division processing (S20) through the abovementioned procedures, the three-dimensional CAD data for specifying the three-dimensional lens shape 51 of the spectacle lens, is divided into the data regarding a plurality of shape element portions used for the edging the spectacle lens. The plurality of shape element portions called here, include the edged outermost shape 56 formed without concave curve portion, the projection shape 54 of the circumferential edge of the spectacle lens, penetrated edging shape portions 57a to 57d which are edging portions for forming the edged outermost shape 56 into the projection shape 54, the convex surface side non-penetrated edging shape portion 58 which is the edging portion for forming the lens convex surface side into the convex surface side outer shape, and the concave surface side non-penetrated edging shape portion 59 which is the edging portion for forming the lens concave surface side into the concave surface side outer shape.

As described above, in the shape division processing (S20), the three-dimensional CAD data of the spectacle lens is divided into the data regarding a plurality of shape element portions, and such a division is performed conforming to a previously set specific division rule. Therefore, no variation occurs in the result or the procedure, etc., of the shape division, unlike a case that the division is performed based on the empirical rule of the operator, etc., of the lens circumferential edger 1. In addition, according to the division rule used for the shape division processing (S20), the projection shape 54, the edged outermost shape 56, the penetrated edging shape portions 57a to 57d, the convex surface side non-penetrated edging shape portion 58 and the concave surface side non-penetrated edging shape portion 59 are sequentially extracted respectively. Namely, according to this division rule, first, a rough schematic shape is extracted, and thereafter a fine partial shape is extracted. Therefore, according to the shape division processing (S20) for performing shape division based on such a division rule, the shape division can be more precisely and efficiently performed, compared with a case based on the empirical rule of the operator, etc.

Further, in the shape division processing (S20), as one of the rough schematic shapes, the outer shape including the edged outermost shape 56, namely the projection shape 54 of the spectacle lens, without concave curve portion, is extracted. This edged outermost shape 56 can be edged using the edging tool having a maximum diameter that can be used by the lens circumferential edger 1, because the edged outermost shape 56 is formed without concave curve portion. Namely, in the shape division processing (S20), by extracting the edged outermost shape 56, the edging by the lens circumferential edger 1 performed thereafter, can also be efficiently performed.

In the shape division processing (S20), the extraction of the edged outermost shape 56 is geometrically performed, conforming to a previously set specific reference. Specifically, the edged outermost shape 56 is geometrically extracted while using the circumscribed square 55 to be superimposed on the projection shape 54, and changing the relative angle of the projection shape 54 and the circumscribed square 55. Accordingly, the edged outermost shape 56 as a result of the extraction, is necessary and sufficient, because it surely includes the projection shape 54 of the spectacle lens, and it is formed without concave curve portion (namely, it doesn't include an unnecessary portion, etc.). Therefore, necessary and sufficient edged outermost shape 56 can be precisely and efficiently extracted.

Here, the case of extracting the edged outermost shape 56 using the circumscribed square 55, is given for example. However, the extraction of the edged outermost shape 56 may be performed using other shape (oval shape or a polygonal shape, etc.) other than the square, if it is a prescribed circumscribed graphic shape circumscribed to the projection shape 54.

### [3-3. Procedure of the outer size determination processing]

Outer size determination processing (S30) performed by the data processing device 3, will be described next.

The outer size determination processing (S30) is the processing mainly performed by the size determination part 33 of the data processing device 3, which is the processing for determining the outer size of the uncut lens (unedged lens) which is the base of the spectacle lens, based on the edged outermost shape specified by the outer layer data extracted in the shape division processing (S20). Such an outer size determination processing (S30) is performed by the size determination part 33, conforming to a previously set specific reference (specifically, a previously programmed size determination rule) described hereafter.

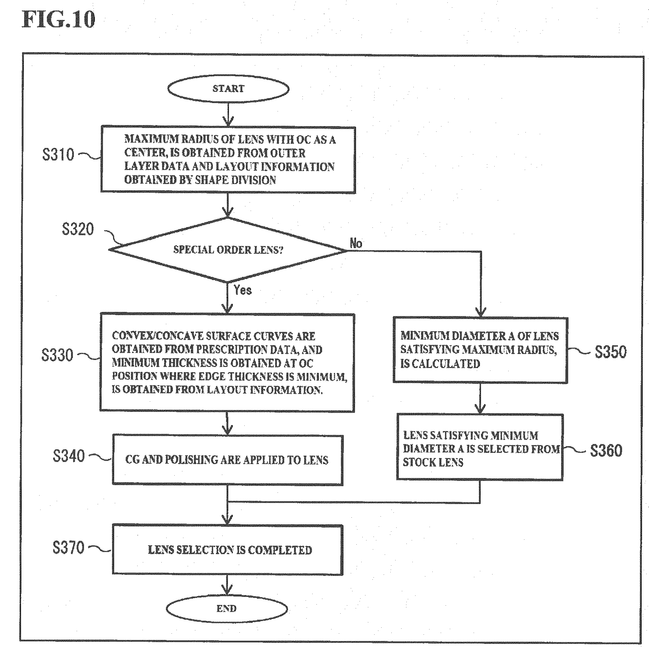

FIG. 10 is a flowchart showing the procedure of the outer size determination processing according to this embodiment.

In the outer size determination processing (S30), first, the size determination part 33 obtains a maximum radius of the edged outermost shape specified by the outer layer data,, with a position of an optical center (OC) on the lens convex surface as a center, based on the outer layer data obtained by the shape division processing (S20) and layout information (information for indicating how the spectacle lens is disposed in the spectacle frame) included in the order-reception information from the lens ordering side terminal device 5 (S310). Then, when the maximum radius is obtained, subsequently, the size determination part 33 judges whether or not the spectacle lens to be edged is a special order lens, based on the order-reception information from the lens ordering side terminal device 5 (S320).

When the spectacle lens to be edged, is the special order lens like a progressive addition lens having a free curved surface of an individual design, the size determination part 33 obtains a convex curve and a concave curve of the spectacle lens, based on prescription data included in the order-reception information from the lens ordering side terminal device 5. Further, the size determination part 33 estimates a circular uncut lens having a diameter obtained by adding a prescribed edging margin to the maximum radius of the edged outermost shape, based on the layout information included in the order-reception information from the lens ordering side terminal device 5. When this uncut lens is edged, a lens edge thickness can be thin at a place of the maximum radius of the edged outermost shape. Therefore, the size determination part 33 edges the uncut lens, so that a prescribed necessary minimum edge thickness can be secured, so that the lens edge thickness is minimum (thinnest). Then, the size determination part 33 obtains the thickness (namely, a minimum thickness at a design reference point on a free curved surface, so that a necessary minimum edge thickness can be secured) (S330). When the minimum thickness is obtained at the design reference point on the free curved surface, the size determination part 33 outputs information regarding the obtained convex surface curve, the concave surface curve, and the minimum thickness, to a lens edger not shown. At this time, the design reference point on the free curved surface is a reference in the case of the progressive addition lens, and an OC position is a reference in the case of other lens. Thereafter, the lens edger applies CG (curve generating) edging and polishing to a lens base material, to thereby turn an estimated uncut lens into an actual one (S340). Regarding the CG edging and polishing, a publicly-known method may be used, and detailed explanation thereof is omitted here.

On the other hand, when not the special order lens but a generally-used uncut lens can be used for the spectacle lens to be edged, the size determination part 33 calculates a minimum diameter A of a circular uncut lens which satisfies the maximum radius of the edged outermost shape (S350). Specifically, the maximum radius is set at a most distant position in a radius direction from the OC in the edged outermost shape, in consideration of a deviation between the OC and an eye point (EP), and a diameter obtained by adding a prescribed edging margin to the maximum radius is set as a minimum diameter A. Then, when the minimum diameter A is calculated, the size determination part 33 selects the uncut lens having a diameter satisfying the minimum diameter A, from a stock general purpose uncut lens (S360). For example, when there is a stock general purpose uncut lens having a diameter of φ60 mm to φ85 mm at every diameter of 5 mm, the uncut lens having a diameter of φ70 mm is selected, if the minimum diameter is A x 2 = 68 mm. Thereafter, the size determination part 33 outputs a selection result of the uncut lens, to the operator of the lens circumferential edger 1 for example.

When the uncut lens whose outer size is determined, is thus selected, the size determination part 33 completes the lens selection (S370).

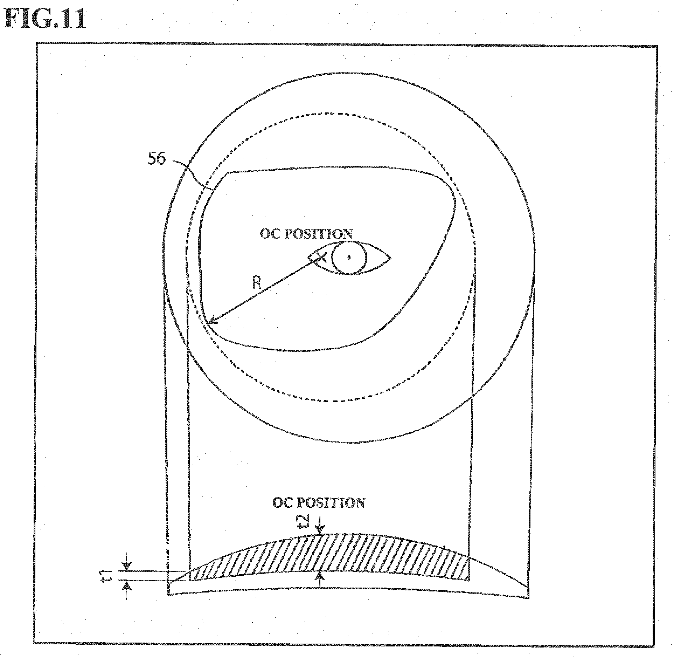

FIG. 11 is an explanatory view showing a specific example of a result of the outer size determination processing in a case of the special order lens according to this embodiment.

In the outer size determination processing (S30), first, the size determination part 33 obtains a maximum radius R, with an OC position on the lens convex surface as a center, regarding the edged outermost shape 56 specified by the outer layer data. Then, if the spectacle lens to be edged is the special order lens, the size determination part 33 obtains a minimum thickness t2 at the OC position (the design reference position on the free curved surface when the lens is the progressive addition lens), so that a lens edge thickness t1 is minimum (thinnest) while securing a prescribed necessary minimum edge thickness. The outer shape of the uncut lens thus specified, is shown by a broken line in the figure, which is thinner than the uncut lens shown by a solid line in this figure (see the hatching portion in the figure).

Thus, in the outer size determination processing (S30), the outer size of the uncut lens is determined, with the edged outermost shape 56 specified by the outer layer data as a reference. The edged outermost shape 56 which is a reference, is a necessary sufficient shape (namely, not including an unnecessary area portion, etc.). Accordingly, the minimum (thinnest) edge thickness of the uncut lens specified by the outer size determination processing (S30) is secured. Namely, since the necessary sufficient edged outermost shape 56 is precisely grasped, the outer size of the uncut lens can be determined in consideration of the necessary minimum edging margin, and in this case as well, a final shape of the spectacle lens can be correctly formed without causing a situation in which there is no edge thickness after edging.

As described above, in the outer size determination processing (S30), the outer size of the uncut lens is determined, with an extraction result of the edged outermost shape in the shape division processing (S20), namely the extraction result of the edged outermost shape conforming to a previously set specific division rule as a reference. Therefore, a thinner spectacle lens can be easily realized, unlike the case of extracting the edged outermost shape based on the empirical rule of the operator, etc., of the lens circumferential edger 1.

Here, for comparison, simple explanation is given for a case of determining the outer size of the uncut lens, with the extraction result as a reference, which is the extraction result of the edged outermost shape based on the empirical rule of the operator, etc.

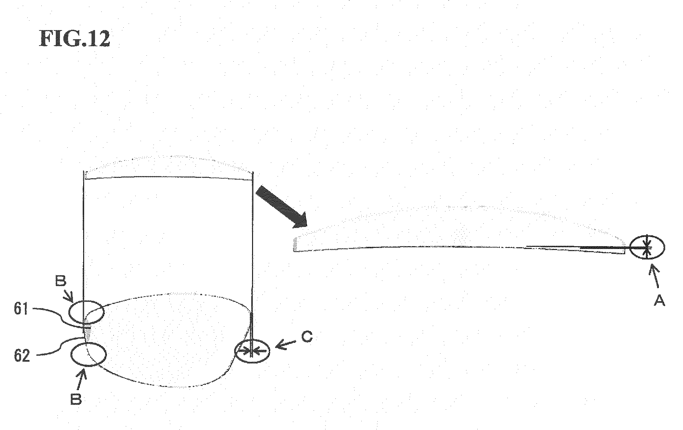

FIG. 12 is an explanatory view showing a specific example of the extraction result of a conventional edged outermost shape.

When the edged outermost shape 62 is extracted by a manual work of the operator, etc., based on the empirical rule of the operator, etc., it cannot be said that the precision of the extracted edged outermost shape 62 is sufficient. Accordingly, if the outer size of the uncut lens is determined with the extraction result of the edged outermost shape 62 as a reference, there is a necessity for selecting the outer size of the uncut lens after securing a sufficient edging margin in the extraction result so as to respond to a correction performed later, thus making it difficult to make a thinner spectacle lens. Namely, in the conventional technique, it is difficult to make a thinnest lens which is suitable for the final shape (see A in the figure).

Further, the precision of the extracted edged outermost shape 62 is not sufficient, and therefore if compared with the projection shape 61 which is the base of the edged outermost shape 62, a frame center position of them are deviated from each other. When such a positional deviation occurs, there is a possibility that a shortage of a lens material (a state in which the lens material is insufficient) occurs in the lens circumferential edge portion (see B in the figure). Namely, a precise final shape cannot be reproduced by the conventional technique. Further, since the precision of the extracted edged outermost shape 62 is not sufficient, there is a possibility that an edge position which is a nose size during wearing, is deviated, if compared with the projection shape 61 which is the base. When such a deviation occurs, an amount of the deviation x 2 is expressed as the deviation of the pupil distance (PD) of the spectacle lens, and therefore PD adjustment would be required.

In contrast, according to the outer size determination processing (S30) described in this embodiment, the edged outermost shape 56 extracted conforming to a previously set specific division rule is set as a reference, and therefore it is possible to select the uncut lens having the outer size securing a minimum edging margin. Accordingly, unlike the case of the conventional technique, the thinnest lens that is suitable for the final shape, can be easily made, and a precise final shape of the lens can be surely reproduced, and PD adjustment is not required. Namely, according to the outer size determination processing (S30) of this embodiment, the thinner spectacle lens can be easily realized through high precision, etc., of extracting the edged outermost shape 56.

### [3-4. Procedure of the edging tool allocation processing]

The edging tool allocation processing (S40) performed by the data processing device 3, will be described next.

The edging tool allocation processing (S40) is the processing mainly performed by the tool allocation part 34 of the data processing device 3, which is the processing of allocating the edging tool 11 to each shape element portion of a plurality of shape element portions divided by the shape division processing (S20), from a plurality of types of edging tools included in the lens circumferential edger 1, so as to be used for this portion. Such an edging tool allocation processing (S40) is performed by the tool allocation part 34, conforming to a previously set tool selection reference (specifically a previously programmed selection rule) as described hereafter.

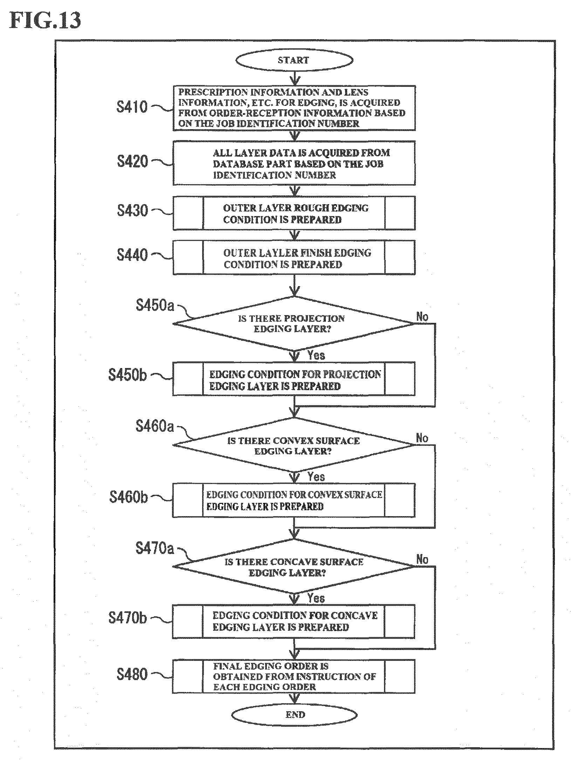

FIG. 13 is a flowchart showing an outline of the procedure of the edging tool allocation processing according to this embodiment.

In the edging tool allocation processing (S40), first, the tool allocation part 34 acquires prescription information and lens information, etc., of the spectacle lens, based on the identification number of the requested job (S410). The prescription information and the lens information, etc., of the spectacle lens are included in the order-reception information from the lens ordering side terminal device 5. Further, the tool allocation part 34 acquires the data of all layers acquired or extracted by the shape division processing (S20) for the spectacle lens, based on the identification number of the job (S420)

Thereafter, the tool allocation part 34 performs rough edging condition preparation processing (S430) regarding the outer layer, and subsequently performs finish edging condition preparation processing (S440). Namely, the tool allocation part 34 prepares the edging condition for forming the edged outermost shape by rough edging, so as to be specified by the outer layer data, and also prepares the edging condition for performing finish edging.

Also, when the data regarding the projection edging layer is included in each data acquired from the database part 36 (S450a), the tool allocation part 34 performs the edging condition preparation processing for the penetrated edging shape portion specified by the projection edging layer data (S450b).

Also, when the data regarding the convex surface layer is included in each data acquired from the database part 36 (S460a), the tool allocation part 34 performs the edging condition preparation processing for the convex surface side non-penetrated edging shape portion specified by the convex surface layer data (S460b).

Also, when the data regarding the concave surface edging layer is included in each data acquired from the database part 36 (S470a), the tool allocation part 34 performs the edging condition preparation processing for the concave surface side non-penetrated edging shape portion specified by the convex surface layer data (S470b).

After these edging condition preparation processing (S430 to S470b) are performed, the tool allocation part 34 performs processing of determining a final edging procedure (S480).

Each of these processing (S430 to S480) will be more specifically described hereafter.

### (Outer layer rough edging condition preparation processing)

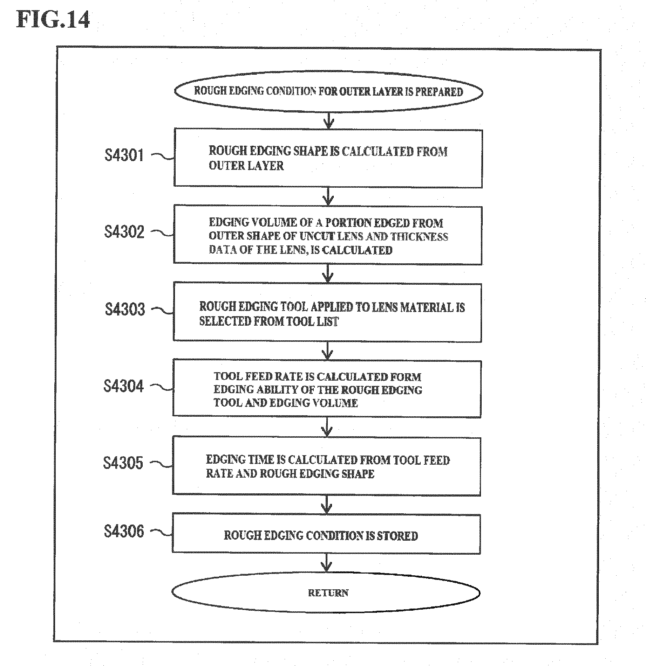

FIG. 14 is a flowchart showing a procedure of the outer layer rough edging condition preparation processing according to this embodiment.

In the outer layer rough edging condition preparation processing (S430), first, the tool allocation part 34 obtains by calculation a rough edging shape in a case of forming the outermost shape by rough edging so as to be specified by the outer layer data (S4301). The rough edging shape is the shape in consideration of a finish edging margin for the edged outermost shape.

When the rough edging shape is obtained, the tool allocation part 34 calculates an edging volume of a portion to be edged by rough edging (namely, a portion to be a difference between the uncut lens and the rough edging shape), based on the outer size of the uncut lens (including a size regarding the lens outer diameter and the lens thickness) determined by the outer size determination processing (S30) (s4302). Further, based on the lens material constituting the uncut lens determined by the outer size determination processing (S30), the tool allocation part 34 selects the edging tool 11 that performs rough edging to the lens material, from a plurality of types of edging tools included in the lens circumferential edger 1 (S4303). Such a tool selection is performed using a previously set tool list for the lens circumferential edger 1. In the tool list, a correlation between a plurality of types of edging tools 11 and the lens material to be edged, is previously defined.

Then, after the edging volume calculation and the tool selection are performed, the tool allocation part 34 obtains a tool feed rate by calculation for performing rough edging using this edging tool 11, from the calculation result of the edging volume an edging ability of the selected edging tool 11 (S4304). Further, the tool allocation part 34 obtains an edging time required for the rough edging by calculation, from the obtained tool feed rate and rough edging shape (S4305).

Each result thus obtained is registered in the database part 36 as the rough edging condition, and stored and held in the database part 36 by the tool allocation part 34 (S4306).

### (Outer layer finish edging condition preparation processing)

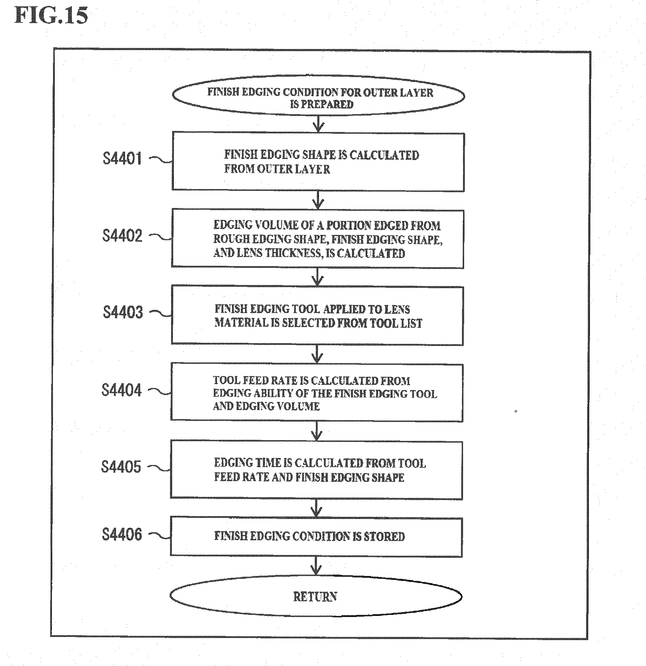

FIG. 15 is a flowchart showing the procedure of an outer layer finish edging condition preparation processing according to this embodiment.

In the outer layer finish edging condition preparation processing (S440), first, the tool allocation part 34 obtains the finish edging shape by calculation when the edged outermost shape specified by the outer layer data is formed by finish edging (S4401). The finish edging shape is the outer shape when finish edging (polishing, etc.,) is performed to the rough edging shape, which is the shape approximately coincides with the edged outermost shape.

When the finish edging shape is obtained, the tool allocation part 34 calculates the edging volume of a portion to be edged by the finish edging, from the difference between the rough edging shape and the finish edging shape, and thickness data of the lens (S4402). Further, based on a lens material to be edged, the tool allocation part 34 selects the edging tool 11 that performs finish edging to the lens material, from a plurality of types of edging tools included in the lens circumferential edger 1 (S4403). The tool selection at this time, is performed using the previously set tool list for the lens circumferential edger 1, similarly to the case of the rough edging. When there are a plurality of types of edging tools 11 that can be applied in the tool list, the edging tool having a maximum tool diameter can be selected.

Then, when the edging volume calculation and the tool selection are performed, the tool allocation part 34 obtains by calculation, the tool feed rate when the finish edging is performed using the edging tool 11, from the calculation result of the edging volume and the edging ability of the selected edging tool 11 (S4404). Further, the tool allocation part 34 obtains an edging time required for the finish edging by calculation, from the obtained tool feed rate and finish edging shape (S4405).

Each result thus obtained is registered in the database part 36 as the finish edging condition, and stored and held in the database part 36 by the tool allocation part 34 (S4406).

### (Edging condition preparation processing for the projection edging layer)

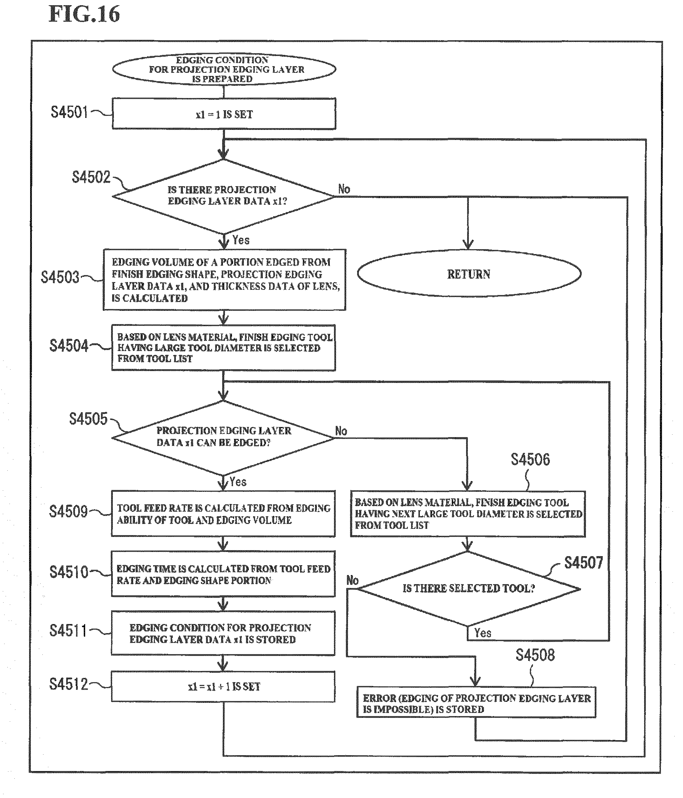

FIG. 16 is a flowchart showing the procedure of an edging condition preparation processing for the projection edging layer according to this embodiment.

In the edging condition preparation processing for the projection edging layer (S450b), first, the tool allocation part 34 sets variable x1, as x1 = 1, for identifying each projection edging layer data recorded in the projection edging layer (S4501). Then, if the projection edging layer data specified by variable x1 is recorded in the projection edging layer, the tool allocation part 34 calculates the edging volume for performing edging to the shape portion, from the difference between the shape portion and the finish edging shape specified by the projection edging layer data, and thickness data of the lens (S4503). Also, based on the lens material to be edged, the tool allocation part 34 selects the edging tool 11 for performing finish edging to the shape portion of the lens material, from a plurality of types of edging tools included in the lens circumferential edger 1 (S4504). Such a tool selection is performed so that the edging tool having a large diameter is prioritized, while using the previously set tool list for the lens circumferential edger 1.

Then, after the tool selection is performed, regarding the projection edging layer data specified by variable x1, the tool allocation part 34 judges whether or not the selected edging tool 11 can perform edging to the shape portion specified by the projection edging layer data (S4505). Such a judgment is performed by comparing a minimum R shape of this shape portion and the tool diameter of the selected edging tool 11. As a result, when it is judged that edging is impossible, the tool allocation part 34 selects the edging tool 11 for finish edging having a second largest tool diameter following the selected edging tool 11 (namely, the edging tool 11 having a largest diameter among unselected tools, although having a smaller diameter than the diameter of the previously selected edging tool 11), from a plurality of types of edging tools included in the lens circumferential edger 1, using the previously set tool list for the lens circumferential edger 1 (S4506). When there is no edging tool 11 to be selected (S4507), the tool allocation part 34 registers error (impossible to edge the projection edging layer) information in the database part 36 as the projection edging layer edging condition, and stores and holds it in the database part 36 (S4508).

Thus, when the tool capable of edging the shape portion specified by the projection edging layer data corresponding to variable x1, is selected, the tool allocation part 34 obtains by calculation the tool feed rate for performing the finish edging using this edging tool 11, from a calculation result of the edging volume of the shape portion to be edged and the edging ability of the edging tool 11 (S4509). Further, the tool allocation part 34 obtains the edging time required for the finish edging of the shape portion, from the obtained tool feed rate and the shape portion to be edged (S4510).

Then, the tool allocation part 34 registers each of the obtained results in the database part 36, as the edging condition for the projection edging layer data specified by variable x1, and stores and holds it in the database part 36 (S4511).

Thereafter, the tool allocation part 34 increments the variable x1 as x1 = x1 + 1 (S4512), and performs a preparation processing of the edging condition again, regarding the variable x1 after increment (S4502 to S4512). Then, the tool allocation part 34 repeatedly performs the abovementioned processing, until the processing for all projection edging layer data extracted in the penetrated edging shape extraction step (S240), is ended (S4502 to S4512). Thus, the edging condition for all projection edging layer data recorded in the projection edging layer, is stored and held in the database part 36.

### (Convex surface layer edging condition preparation processing)

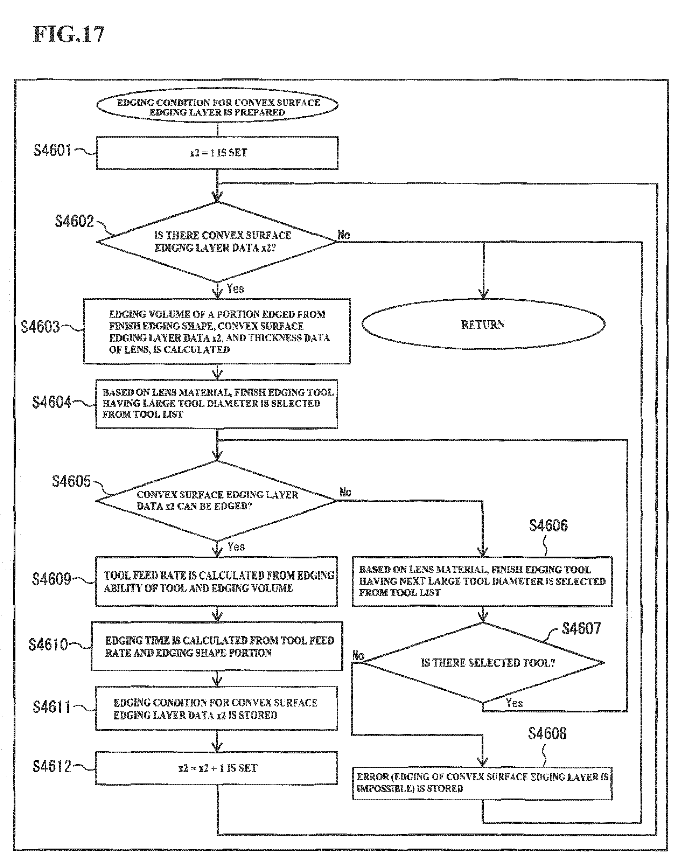

FIG. 17 is a flowchart showing a procedure of a convex surface layer edging condition preparation processing according to this embodiment.

In the convex surface layer edging condition preparation processing (S460b), first, the tool allocation part 34 sets variable x2, as x2 = 1 for identifying each convex surface layer data recorded in the convex surface layer (S4601). Then, if the convex surface layer data specified by variable x 2 is recorded in the convex surface layer, the tool allocation part 34 calculates the edging volume for edging the shape portion, from the difference between the shape portion specified by the convex surface layer data and the finish edging shape, and the thickness data of the lens (S4603). Further, the tool allocation part 34 selects the edging tool 11 for performing finish edging to the shape portion of the lens material, from a plurality of types of edging tools included in the lens circumferential edger 1 (S4604). Such a tool selection is performed so that the edging tool having a large diameter is prioritized, using the previously set tool list for the lens circumferential edger 1.

Then, when the tool selection is performed, regarding the convex surface layer data specified by variable x2, the tool allocation part 34 judges whether or not the selected tool can perform edging to the shape portion specified by the convex surface layer data (S4605). Such a judgment is performed by comparing the minimum R shape part of this shape portion and the tool diameter of the selected edging tool 11 for example. As a result, when it is judged that edging is impossible, the tool allocation part 34 selects the edging tool 11 for finish edging having a second largest tool diameter following the selected edging tool 11 (namely, the edging tool 11 having a largest diameter among unselected tools, although having a smaller diameter than the diameter of the previously selected edging tool 11), from a plurality of types of edging tools included in the lens circumferential edger 1, using the previously set tool list for the lens circumferential edger 1 (S4606). When there is no edging tool 11 to be selected (S4607), the tool allocation part 34 registers error (impossible to edge the convex surface layer) information in the database part 36 as the convex surface layer edging condition, and stores and holds it in the database part 36 (S4608).

Thus, regarding variable x2, when the tool selection is performed so as to select the tool capable of edging the shape portion by the convex surface edging layer, the tool allocation part 34 obtains by calculation the tool feed rate for performing the finish edging using this edging tool 11, from a calculation result of the edging volume of the shape portion to be edged and the edging ability of the edging tool 11 (S4609). Further, the tool allocation part 34 obtains by calculation, the edging time required for the finish edging of the shape portion, from the obtained tool feed rate and the shape portion to be edged (S4610).

Then, the tool allocation part 34 registers each of the obtained results in the database part 36 as the edging condition for convex surface edging layer data specified by variable x2, and stores and holds it in the database part 36 (S4611).

Thereafter, the tool allocation part 34 increments the variable x2, as x2 x2 + 1 (S4612), and performs a preparation processing of the edging condition again, regarding the variable x2 after increment (S4602 to S4612). Then, the tool allocation part 34 repeatedly performs the abovementioned processing, until the processing for all convex surface layer data extracted in the non-penetrated edging shape extraction step (S250), is ended (S4602 to S4612). Thus, the edging condition for all convex surface layer data recorded in the convex surface layer, is stored and held in the database part 36.

### (Edging condition preparation processing for the concave surface edging layer)

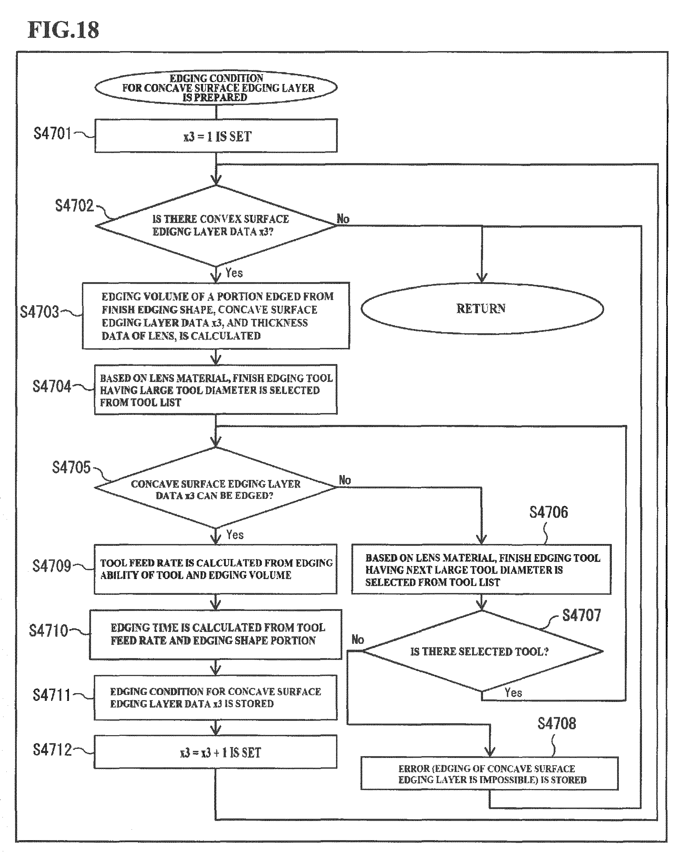

FIG. 18 is a flowchart showing the procedure of an edging condition preparation processing for the concave surface edging layer according to this embodiment.

In the edging condition preparation processing for the concave surface edging layer (S470b), first, the tool allocation part 34 sets variable x3, as x3 = 1 for identifying each concave surface edging layer data recorded in the concave surface edging layer. Then, if the concave surface edging layer data specified by variable x3 is recorded in the concave surface edging layer (S4702), the tool allocation part 34 calculates the edging volume for performing edging to the shape portion, from the difference between the shape portion specified by the projection edging layer data and the finish edging shape (S4703). Also, based on the lens material to be edged, the tool allocation part 34 selects the edging tool 11 for performing the finish edging to the shape portion of the lens material, from a plurality of types of edging tools included in the lens circumferential edger 1 (S4704). Such a tool selection is performed so that the edging tool having a large diameter is prioritized, while using the previously set tool list for the lens circumferential edger 1.

Then, after the tool selection is performed, regarding the concave surface edging layer data specified by variable x3, the tool allocation part 34 judges whether or not the selected edging tool 11 can perform edging to the shape portion specified by the concave surface edging layer data (S4705). Such a judgment is performed by comparing a minimum R shape part of the shape portion and the tool diameter of the selected edging tool 11. As a result, when it is judged that edging is impossible, the tool allocation part 34 selects the edging tool 11 for the finish edging having a second largest tool diameter following the selected edging tool 11 (namely, the edging tool 11 having a largest diameter among unselected tools, although having a smaller diameter than the diameter of the previously selected edging tool 11), from a plurality of types of edging tools included in the lens circumferential edger 1, while using the previously set tool list for the lens circumferential edger 1 (S4706). When there is no edging tool 11 to be selected (S4707), the tool allocation part 34 registers error (impossible to edge the projection edging layer) information in the database part 36 as the concave surface edging layer edging condition, and stores and holds it in the database part 36 (S4708).

Thus, regarding variable x3, when the tool capable of edging the shape portion specified by the concave surface edging layer data, the tool allocation part 34 obtains by calculation, the tool feed rate when finish edging is performed using the edging tool 11, from the calculation result of the edging volume of the shape portion to be edged and the edging ability of the selected edging tool 11 (S4709). Further, the tool allocation part 34 obtains by calculation the edging time required the finish edging of this shape portion, from the obtained tool feed rate and the shape portion to be edged (S4710).

Then, the tool allocation part 34 registers each of the obtained results in the database part 36, as an edging condition for the concave surface edging layer data specified by variable x3, and stores and holds it in the database part 36 (S4711).

Thereafter, the tool allocation part 34 increments the variable x3, as x3 x3 + 1 (S4712), and performs a preparation processing of the edging condition again, regarding the variable x3 after increment (S4702 to S4712). Then, the tool allocation part 34 repeatedly performs the abovementioned processing, until the processing for all projection edging layer data extracted in the non-penetrated edging shape extraction step (S250), is ended (S4702 to S4712). Thus, the edging condition for all concave surface edging layer data recorded in the concave surface edging layer, is stored and held in the database part 36.

### (Each layer edging order determination processing)

In each layer edging order determination processing (S480), the tool allocation part 34 determines a final edging order regarding each edging tool 11 when lens edging is performed using a plurality of types of edging tools 11, based on the edging condition prepared in each of the abovementioned edging condition preparation processing (S430 to S470b). Specifically, first, the tool allocation part 34 determines to perform edging under the rough edging condition prepared by the outer layer rough edging condition preparation processing (S430), and subsequently performs edging under the finish edging condition prepared by the outer layer finish edging condition preparation processing (S440). Then, the tool allocation part 34 determines the edging order in a procedure described hereafter, regarding the edging to be performed hereafter, under the edging condition prepared by the edging condition preparation processing for the projection edging layer (S450b), the edging condition preparation processing for the convex surface layer (S460b) and the edging condition preparation processing for the concave surface edging layer (S470b).

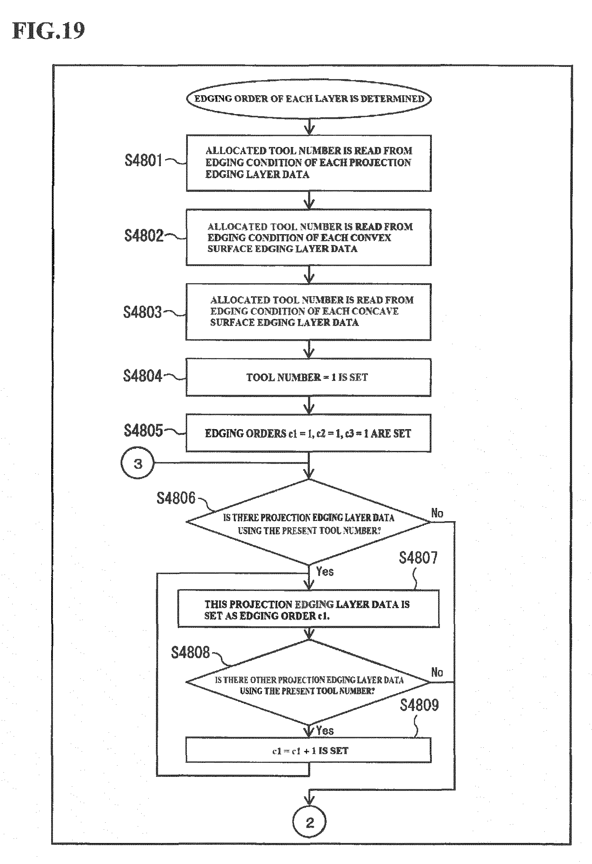

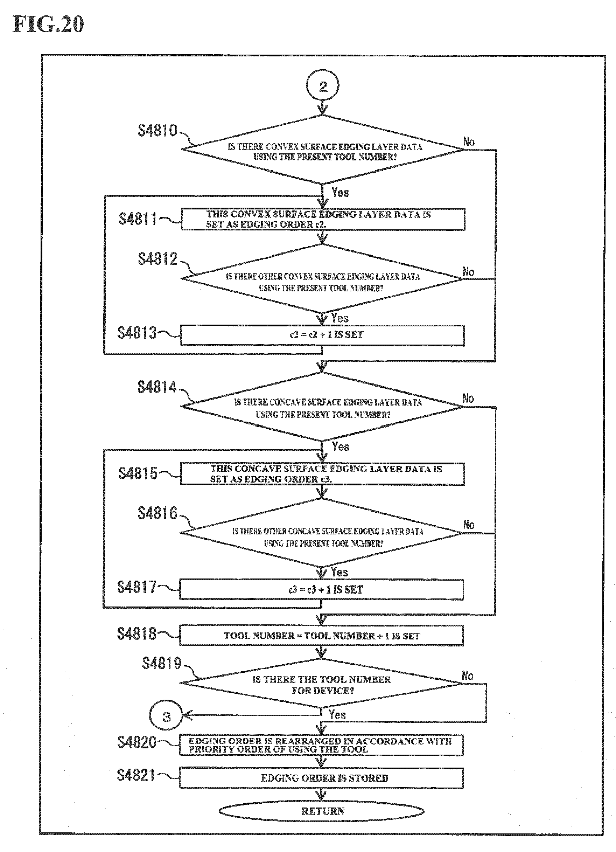

FIG. 19 and FIG. 20 are flowcharts showing the procedure of each layer edging order determination processing according to this embodiment.

In determining the edging order of the edging under the edging condition prepared by each edging layer edging condition preparation processing (S450b, S460b, S470b), the tool allocation part 34 reads the tool number for identifying the edging tool 11 allocated to each projection edging layer data, from the edging condition for each projection edging layer data recorded in the projection edging layer (S4801).

When there are a plurality of projection edging layer data, the tool allocation part 34 reads the tool number allocated to all types of the edging tools 11 respectively. The tool number is previously individually set for every type of the edging tools 11, for identifying each edging tool 11 included in the lens circumferential edger 1.

Also, the tool allocation part 34 reads the tool number for identifying the edging tool 11 allocated to each convex surface layer data, from the edging condition for each convex surface layer recorded in the convex surface layer (S4802). When a plurality of convex surface layer data are recorded, the tool allocation part 34 reads the tool number of all types of the edging tools 11 allocated to each of the plurality of data.

Further, the tool allocation part 34 reads the tool number for identifying the edging tool 11 allocated to each concave surface edging layer data, from the edging condition for each concave surface edging layer data recorded in the concave surface edging layer (S4803). When a plurality of concave surface edging layer data are recorded, the tool allocation part 34 reads the tool number of all types of the edging tools 11 allocated to each of the plurality of concave surface edging layer data.

After the tool number is read, the tool allocation part 34 sets the value of the tool number to 1, which is the value for the processing of determining the edging order (S4804). Further, the tool allocation part 34 sets variables c1, c2, and c3 so to satisfy c1 = 1, c2 1, and c3 = 1, for identifying the edging order (S4805).

Thereafter, based on a result of reading the tool number regarding the projection edging layer data, the tool allocation part 34 judges whether or not the projection edging layer data is recorded for using the edging tool 11 specified by a setting value of the present tool number (S4806), and if there is a corresponding tool number, the edging order regarding this projection edging layer data is set to the present setting value c1 (S4807). Then, the tool allocation part 34 judges whether or not other projection edging layer data is recorded, for using the edging tool 11 specified by the same tool number (S4808), and if such other data is recorded, the tool allocation part 34 increments the variable c1 of the edging order regarding the projection edging layer data, to c1 = c1 + 1 (S4809), and thereafter the edging order regarding this projection edging layer data is set as the present (after increment) setting value c1 (S4807). Such a processing is repeatedly performed by the tool allocation part 34 until the edging order allocation is ended, regarding all projection edging layer data for using the edging tool 11 specified by the same tool number (S4807 to S4809).

After end of the abovementioned processing for the projection edging layer data, subsequently, the tool allocation part 34 judges whether or not there is the convex surface edging layer data for using the edging tool 11 specified by the setting value of the present tool number (the same tool number as the case of the projection edging layer data), based on the result of reading the tool number regarding the convex surface layer data (S4810). As a result, if there is a corresponding tool number, the tool allocation part 34 sets the edging order regarding the convex surface layer data as the present (after increment) setting value c2 (S4811). Then, the tool allocation part 34 judges whether or not there is other convex surface layer data for using the edging tool 11 specified by the same tool number (S4812), and if there is such other data, the tool allocation part 34 increments the variable c2 for the edging order regarding the convex surface layer data, as c2 = c2 + 1 (C4813), and thereafter sets the edging order regarding the convex surface layer data as the present (after increment setting value c2 (S4811). The tool allocation part 34 repeatedly perform such a processing until the allocation of the edging order is ended, regarding all convex surface layer data for using the edging tool 11 specified by the same tool number (S4811 to S4813).

After end of the abovementioned processing regarding the convex surface layer data, based on the result of reading the tool number regarding the concave surface edging layer data, the tool allocation part 34 judges whether or not there is the concave surface edging layer data for using the edging tool 11 specified by the setting value of the present tool number (the same tool number as the case of the abovementioned convex surface layer data) (S4814). As a result, if there is a corresponding tool number, the tool allocation part 34 sets the edging order regarding the concave surface edging layer data as the present (after increment) setting value c3 (S4815). Then, the tool allocation part 34 judges whether or not there is other concave surface edging layer data for using the edging tool 11 specified by the same tool number (S4816). If there is such other data the tool allocation part 34 sets a tool use order c3 as c3 = c3 + 1 (S4817), and thereafter sets the edging order regarding the concave surface edging layer data as the present (after increment) setting value c3 (S4814). The tool allocation part 34 repeatedly performs such a processing until the allocation of the edging order is ended, regarding all concave surface edging layer data for using the edging tool 11 specified by the same tool number (S4815 to S4817).

Thereafter, the tool allocation part 34 increments the value of the tool number as tool number = tool number + 1 (S4818). Then, the tool allocation part 34 judges whether or not the edging tool 11 specified by the setting value of the present (after increment) tool number is included in the lens circumferential edger 1 (S4819). As a result, if the corresponding edging tool 11 is included in the lens circumferential edger 1, the tool allocation part 34 performs the abovementioned series of processing again regarding this edging tool 11 (S4806 to S4619). The tool allocation part 34 repeatedly performs these processing until the processing for all edging tools 11 included in the lens circumferential edger 1, is ended.

Through the abovementioned series of processing, the tool allocation part 34 allocates the edging order to each projection edging layer data, each convex surface edging layer data, and each concave surface edging layer data respectively. However, the allocation result thus obtained, is that the edging order conforms to the tool number order of each edging tool 11, and therefore when the lens edging is actually performed, the lens edging is not necessarily efficiently performed.

Therefore, after the edging order is allocated to each projection edging layer data, each convex surface edging layer data, and each concave surface edging layer data, the tool allocation part 34 rearranges the allocated edging order, so as to efficiently perform the lens edging (S4820). Specifically, the tool allocation part 34 rearranges an order of using each edging tool 11, in accordance with a previously set priority order of using the tool. Thus, the edging order regarding each projection edging layer data, each convex surface layer data, and each concave surface edging layer data, does not conform to the tool number order of each edging tool 11, but conform to the priority order of using the tool set for each edging tool 11.

As the priority order of using the tool as a reference in this case, preferential use of the edging tool 11 having a large tool diameter, can be given. However, the priority order of using the tool is not necessarily limited to the above-described content, if it is previously set according to a structure of the lens circumferential edger 1 or a type, etc., of the prepared edging tool 11. As other example, an arrangement order of each edging tool 11 in the lens circumferential edger 1 (for example, preferentially closer to a lens), a time order required for edging (for example, preferentially shorter edging time), and a suitable combination of them, can be given.

Then, after rearrangement of the edging order is performed, the tool allocation part 34 registers the rearranged edging order in the database part 36 in association with the type of the edging tool 11 used for edging, the edging layer data regarding the shape portion to be edged, and the edging condition, etc., regarding the edging layer data, and stores and holds it in the database part 36 (S4821).

### (Edging instruction processing)

The content thus stored and held in the database part 36, is thereafter used for giving an instruction of edging of the spectacle lens, to the lens circumferential edger 1 by the edging instruction part 35 of the data processing device 3. Namely, the edging instruction part 35 gives the instruction of edging to the lens circumferential edger 1, so as to use each edging tool 11 allocated by the tool allocation part 34 in a using order determined by the same tool allocation part 34 (S50), in accordance with the content stored and held in the database part 36. Regarding a specific method of the edging instruction by the edging instruction part 35, a publicly-known technique may be used, and therefore a detailed explanation therefore is omitted here.

As described above, in the edging tool allocation processing (S40), the edging tool 11 used for edging each shape element portion, is allocated to each of the plurality of shape element portions divided by the shape division processing (S20). Namely, the data processing device 3 performs shape division processing (S20) and edging tool allocation processing (S40) as pre-processing to be performed prior to the edging instruction processing to the lens circumferential edger 1. Then, such a pre-processing is performed by the data processing device 3, conforming to a previously set specific division rule and tool selection rule. Therefore, each processing of the shape division and tool allocation as the pre-processing, is performed based on a rule conforming to a previously set specific reference, and therefore the processing result always conforms to the specific reference.

Accordingly, the processing result of the pre-processing performed by the data processing device 3 always conforms to the specific reference, and therefore unlike the case of performing the processing based on the empirical rule of the operator, etc., of the lens circumferential edger 1, there is no risk of generating the necessity for correcting the processing result later, and a sufficient precision can be obtained. Further, since the pre-processing is always performed conforming to the specific reference, unlike the case of performing the processing based on the empirical rule of the operator, etc., the processing can be extremely efficiently performed, with no trial and error added to the procedure.

This is especially effective for a case when the spectacle lens to be edged is the lens to be framed into a highly curved frame (with a strong degree of a curve) mainly used as sunglasses. The reason is as follows: when edging for a high curve frame is performed, most of the case is that the lens circumferential edge portion is edged into a complicated shape, but even in this case, an optimal edging tool 11 can be precisely and efficiently selected for each edging portion if the pre-processing is always performed conforming to the specific reference.

### [3-5. Procedure of the lens edging]

Next, explanation is given for an edging of the spectacle lens performed by the lens circumferential edger 1 in accordance with the edging instruction from the data processing device 3 (S60).

In edging the spectacle lens, the lens circumferential edger 1 is notified of the processing result from the data processing device 3, namely the lens circumferential edger 1 is notified of the processing result of the shape division processing (S20) and the edging tool allocation processing (S40) performed by the data processing device 3, from the data processing device 3 as the edging instruction, and the uncut lens whose outer size is determined by the outer size determination processing (S30) performed by the data processing device 3, is set in the circumferential edging part 12.

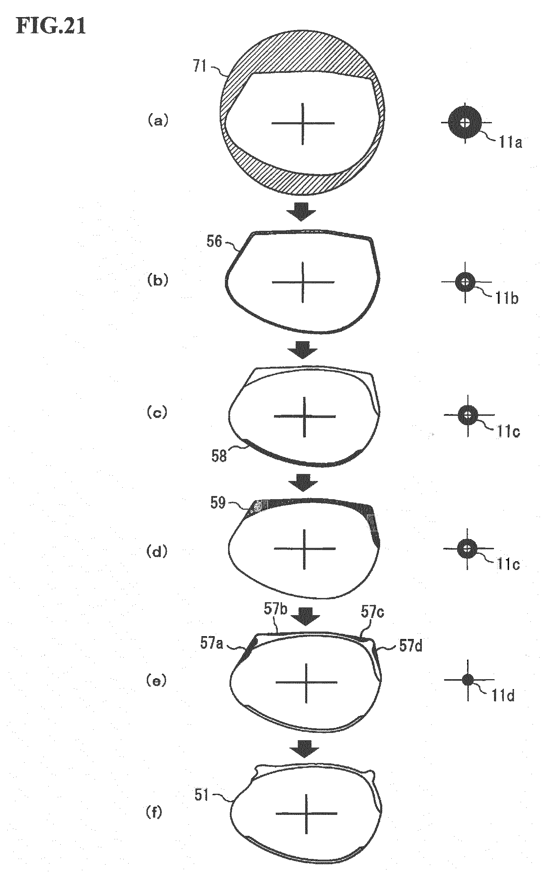

FIG. 21 is an explanatory view showing a specific example of the processing content of the lens edging according to this embodiment.

In edging the spectacle lens, first, the lens circumferential edger 1 performs edging to the set uncut lens 71 by rough edging, in accordance with the edging order indicated by the edging instruction from the data processing device 3. Specifically, edging is performed to the circumferential edge of the uncut lens 71 into a rough edging shape, using an edging tool 11a for rough edging indicated by a rough edging condition (see FIG. 21(a)). Then, after the circumferential edge is edged into the rough edging shape, subsequently the lens circumferential edger 1 performs edging under a finish edging condition. Specifically, edging into the rough edging shape is performed as the finish edging shape, using the edging tool 11b for finish edging indicated by the finish edging condition. Such a finish edging shape is the shape that approximately coincides with the edged outermost shape 56 (see FIG. 21(b)).

In the outer size determination processing (S30), the edging under such a rough edging condition and the finish edging condition, is performed to the uncut lens 71 whose outer size is determined. Namely, the outer size of the uncut lens 71 to be edged, is determined, with a necessary sufficient edged outermost shape 56 as a reference, which is precisely extracted in the shape division processing (S20). Accordingly, regarding the edging under the rough edging condition and the finish edging condition performed to the uncut lens 71, the edging amount and the edging time can be necessary minimum.

Thereafter, the lens circumferential edger 1 executes preferentially the edging by use of the edging tool 11 having a large tool diameter, in accordance with the edging order indicated by the edging instruction from the data processing device 3. Specifically, for example, when the edging tool 11d used for the finish edging of each of the penetrated edging shape portions 57a to 57d, and the edging tool 11c used for the finish edging of the convex surface side non-penetrated edging shape portion 58 and the concave surface side non-penetrated edging shape portion 59, are compared, counterboring edging is performed to the convex surface side non-penetrated edging shape portion 58 using the edging tool 11c when the tool diameter of the edging tool 11c is larger than the tool diameter of the edging tool 11d (see FIG. 21(c)), and the counterboring edging is further performed to the concave surface side non-penetrated edging shape portion 59 using the same edging tool 11c (see FIG. 21(d)), and thereafter edging is sequentially performed to each of the penetrated edging portions 57a to 57d using the edging tool 11d (see FIG. 21(e)). When a different edging tool 11c is used for the convex surface side non-penetrated edging shape 58 and the concave surface side non-penetrated edging shape portion 59, the edging tool having a larger tool diameter is preferentially used. Similarly, when a different edging tool 11d is used for each of the penetrated edging shape portions 57a to 57d, the edging tool having a larger diameter is preferentially used.

Thus, the edging order of the edging performed to the penetrated edging shape portions 57a to 57d, the convex surface side non-penetrated edging shape portion 58, and the concave surface side non-penetrated edging shape portion 59, is suitably rearranged, based on tool diameters of the edging tools 11 c and 11d used for this edging. When the edging tool having a different tool diameter is used, generally, the edging time can be likely to be short, by the edging using the edging tool having a larger tool diameter, if the edging amount is the same. Therefore, when there is an overlapped edged portion by a different edging tool, this edging portion is edged preferentially by the edging tool having a large tool diameter, by rearranging the edging order based on the tool diameter. Namely, by rearranging the edging order based on the tool diameter, the edging time can be shortened for such an overlapped edging portion, and as a result, the edging can be efficiently performed to the edging portion.

If edging is performed to the penetrated edging shape portions 57a to 57d, the convex surface side non-penetrated edging shape portion 58, and the concave surface side non-penetrated edging shape portion 59 in this edging order, the lens circumferential edger 1 obtains the spectacle lens after the edging, which is the spectacle lens whose circumferential edge is edged into the three-dimensional lens shape 51 specified by the three-dimensional CAD data (see FIG. 21(f)).

As described above, the edging (S60) performed by the lens circumferential edger 1, is performed to the uncut lens 71 whose outer size is determined, by the outer size determination processing (S30) by the data processing device 3, in accordance with the processing result of the shape division processing (S20) and the edging tool allocation processing (S40) by the data processing device 3. Accordingly, in such an edging (S60), even when the lens circumferential edger 1 performs edging selectively using a plurality of types of edging tools, the edging can be precisely performed with high precision. This is especially effective for the case when the spectacle lens to be edged is the lens to be framed into a highly curved frame (with a strong degree of a curve) mainly used as sunglasses.

### <4. Effect of this embodiment>

According to this embodiment, the following effect can be obtained.

In the lens edging system described in this embodiment, the shape division processing (S20) is performed to the three-dimensional CAD data of the spectacle lens, at least through the following steps:
the projection shape acquisition step of acquiring projection layer data regarding a projection shape 54 (S220);
the outermost shape extraction step of extracting the outer layer data regarding the edged outermost shape 56, using the circumscribed square 55 superimposed on the projection shape 54 (S230); and
the penetrated edging shape extraction step of obtaining the differential area between the edged outermost shape 56 and the projection shape 54 as the penetrated edging shape portions 57a to 57d, and extracting the data regarding the obtained penetrated edging shape portions 57a to 57d as the projection edging layer data (S240).

Namely, in the shape division processing (S20) of this embodiment, the three-dimensional CAD data of the spectacle lens is divided into the data regarding a plurality of shape element portions, and such a division is performed conforming to a previously set specific division rule. Therefore, according to the shape division processing of this embodiment (S20), unlike the case of performing the shape division based on the empirical rule of the operator, etc., of the lens circumferential edger 1, there is no variation in the result or the procedure, etc., of the shape division, and therefore the shape division can be precisely and efficiently performed.

Further, in the shape division processing (S20) of this embodiment, a fine partial shape is extracted after a rough schematic shape is extracted in accordance with a specific division rule, wherein as one of the rough schematic shape, the edged outermost shape 56 is extracted, and this extraction is geometrically performed using the circumscribed square 55 superimposed on the projection shape 54. Therefore, the edged outermost shape 56 as such an extraction result, surely includes the projection shape 54 of the spectacle lens, and is formed without a concave curve portion, and is a necessary sufficient one for including the projection shape 54 (namely, not including an unnecessary area portion). Namely, in the shape division processing (S20), the necessary sufficient edged outermost shape 56 can be precisely and efficiently extracted by geometrically extracting the circumscribed square 55. This not only contributes to high precision and high efficiency, etc., of the shape division processing (S20), but also is extremely effective for high precision and high efficiency of the outer size determination processing (S30) and the edging tool allocation processing (S40) performed thereafter.

In addition, in the shape division processing (S20) of this embodiment, the convex surface layer data and the concave surface layer data are acquired in the outer shape acquisition step (S210) performed prior to the projection shape acquisition step (S220), and in the projection shape acquisition step (S220), the projection layer data regarding the projection shape 54 is acquired by synthesizing the convex surface side outer shape 52 and the concave surface side outer shape 53. Then, in the non-penetrated edging shape extraction step performed after the projection shape acquisition step (S220), the outermost shape extraction step (S230), and the penetrated edging shape extraction step (S240), the convex surface side non-penetrated edging shape portion 58 is obtained as the differential area between the projection shape 54 and the convex surface side outer shape 52, and the data regarding the convex surface side non-penetrated edging shape portion 58 is extracted as the convex side edging shape data. Also, the concave surface side non-penetrated edging shape portion 59 is obtained as the differential area between the projection shape 54 and the concave surface side outer shape 53, and the data regarding the concave surface side penetrated edging shape portion 59 is extracted as the concave surface side edging shape data.

Therefore, according to the shape division processing (S20) of this embodiment, according to the shape division processing (S20) of this embodiment, even in the case of a three-dimensional shaped spectacle lens having mutually different convex surface side outer shape 52 and the concave surface side outer shape 53, the edging portion to be subjected to the counterboring edging, is extracted conforming to a previously set specific division rule, and this is extremely effective particularly in a case that the spectacle lens to be edged is the lens framed into a high curve (with strong degree of a curve) frame mainly used as sunglasses. This is because when the edging is applied to the lens having a high curve frame, most of the case is that the lens circumferential edge portion is edged into a complicated shape, but in even in this case, the shape portion which is the edging portion, is precisely and efficiently extracted on the convex surface side and the concave surface side respectively.

Further, in the lens edging system described in this embodiment, the outer layer for specifying the edged outermost shape 56 is extracted in the outermost shape extraction step (S230) of the shape processing division processing (S20), and thereafter based on the outer layer data, the outer size determination processing (S30) is performed as the step of determining the outer size of the uncut lens 71 which is the base of the spectacle lens. Namely, in the outer size determination processing (S30) of this embodiment, the outer size of the uncut lens 71 is determined, with an extraction result of the outermost shape 56, namely the outer size of the outermost shape 56 conforming to a previously set specific division rule, as a reference.

Therefore, according to the outer size determination processing (S30) of this embodiment, the uncut lens 71 having the outer size of securing a minimum edging margin, can be selected. Therefore, unlike the case of extracting the outermost shape based on the empirical rule of the operator, etc., of the lens circumferential edger 1, a thinnest lens can be easily made so as to be suitable for a final shape, then a precise lens final shape can be reproduced, and PD adjustment is not required. Namely, according to the outer size determination processing of this embodiment (S30), the thinnest spectacle lens can be easily realized, through higher precision, etc., in the extraction of the edged outermost shape.

In addition, according to the outer size determination processing (S30) of this embodiment, the uncut lens 71 having the outer size of securing the minimum edging margin can be selected. Therefore, in the edging (S60) which is the step performed thereafter by the lens circumferential edger 1, the edging amount and the edging time of the edging performed to the uncut lens 71, can be suppressed to necessary minimum, thus realizing a faster edging (S60) by the lens circumferential edger 1 and reduction of a cost.

Further, in the lens edging system described in this embodiment, the edging (S60) by the lens circumferential edger 1, is performed, through the shape division processing (S20) which is the step of dividing the edging portion of the spectacle lens into a plurality of shape element portions, the tool allocation step (S430 to S470) of allocating the edging tool used for edging each one of the shape element portions, the edging order determination step (S480) of determining the using order of each edging tool allocated to the plurality of shape element portions, and the edging instruction processing (S50) which is the step of making the lens circumferential edger 1 perform edging using each of the edging tools in accordance with the determined using order of each edging tool. Namely, in the lens edging system described in this embodiment, the edging tool allocation processing (S40) including the shape division processing (S20), the tool allocation step (S430 to S470b), and the edging order determination step (S480), is performed as the pre-processing to be performed prior to the edging instruction processing (S50) performed to the lens circumferential edger 1.

In the shape division processing (S20) out of these processing, the projection shape 54, the edged outermost shape 56, the penetrated edging shape portions 57a to 57d, the convex surface side non-penetrated edging shape portion 58 and the concave surface side non-penetrated edging shape portion 59 are extracted as a plurality of shape element portions. Further, each of the penetrated edging shape portions 57a to 57d, the convex surface side non-penetrated edging shape portion 58 and the concave surface side non-penetrated edging shape portion 59, is individually extracted, if there are the edging portions at distant positions. Then, in the edging tool allocation processing (S40) performed thereafter, the edging tools 11a to 11d considered to be most suitable for the edging, are individually allocated to each one of the extracted shape element portion. However, the same type of the edging tools 11a to 11d are allocated to the shape element portion that can be edged by the same type of the edging tools 11a to 11d, even if they exist at mutually distant positions.

Namely, in the lens edging system of this embodiment, in the pre-processing through the shape division processing (S20) and the edging tool allocation processing (S40), the edging tools 11 a to 11d considered to be optimal for each shape element portion, are allocated to a "convex surface side counterboring edging portion" and a "concave surface side counterboring edging portion" for example, each of which is divided as separate shape element portions. Accordingly, unlike the case of performing the tool allocation while judging the matching between the edging portion and a selectable edging tool based on the empirical rule of the operator, etc., of the lens circumferential edger 1, the processing result of the pre-processing always conforms to a specific reference, and therefore an optimal tool allocation can be surely performed. In addition, unlike the case that the operator, etc. performs the tool allocation based on the empirical rule, there is no problem that the processing result of the pre-processing is required to be corrected, and a sufficient precision can be obtained. Further, an element such as trial and error, etc., is not added to the procedure, and therefore edging can be extremely efficiently performed.

Thus, in the lens edging system of this embodiment, the optimal tool allocation can be surely performed in the pre-processing, and therefore the edging (S60) performed based on the result of the pre-processing can be efficiently performed with high precision, even if a plurality of types of edging tools are selectively used.

### <5. Modified example, etc.>

Embodiments of the present invention have been described above. However, the abovementioned disclosed contents are simply exemplary embodiments of the present invention, and a technical range of the present invention is not limited thereto.

Modified examples other than the abovementioned embodiments will be described hereafter.

The abovementioned embodiment shows a case of acquiring the convex surface layer data and the concave surface layer data regarding the three-dimensional shaped spectacle lens having mutually different convex surface side outer shape 52 and the concave surface side outer shape 53, and acquiring the projection layer data from the result of synthesizing them. However, the present invention is not limited thereto, and can be applied to a spectacle lens having the same convex surface side outer shape 52 and the concave surface side outer shape 53. In this case, the data processing device 3 acquires the projection shape from the three-dimensional CAD data of the spectacle lens, and extracts the edged outermost shape using the circumscribed square superimposed on the projection shape, and thereafter extracts the penetrated edging shape portion.

Further, the abovementioned embodiment shows a case of determining a diameter size as the outer size of the uncut lens, in the outer size determination processing (S30). This is because the uncut lens is generally formed into a circular shape in planar view. Accordingly, if there is an uncut lens having a shape other than the circular shape in planar view, it is conceivable to determine the outer size corresponding to this shape. Namely, the outer size of the uncut lens is not limited to its diameter size.

Further, the abovementioned embodiment shows a case that a tool selection reference used in the edging tool allocation processing (S40) is based on the attributes of the edging tool 11 of the lens circumferential edger 1. Specifically, by focusing on the tool diameter which is one of the attributes of the edging tool as the tool selection reference, and the edging tool 11 having a large tool diameter is preferentially selected. However, the tool selection reference is not limited thereto, and the following example of the tool selection reference may also be used.

As other example of the tool selection reference, a calculation result of the edging volume of the shape element portion to be edged, is used. For example, when the edging tool 11 is an end mill tool having a small diameter, and when rough edging is performed from the circular shape to a rough outer shape using this edging tool 11, at least one of the following two techniques can be employed. As one of the techniques, there is a technique of gradually edging the shape element portion from a circumferential edge side to inside so that edging chips are approximately constant. As the other technique, there is a technique of edging the shape element portion by drawing a large locus by the portion of this tool size so as to perform shaping with a small diameter tool. In the case of this technique, a large piece of the lens is included in the edging chips. When either one of these two techniques is selected, efficient edging time and suppression of tool wear by efficient tool selection, can be realized by selecting the above technique in consideration of a chipped volume by edging. Specifically, when the edging volume is large, shaping is performed by a small diameter tool, and when the edging volume is small, edging is performed by a large diameter tool from a circumferential edge side, and this is sometimes more efficient in edging. Thus, even in the case of the outer shape having the same shape, it is extremely effective to set the tool selection reference in consideration of the edging area and the edging volume, etc., as a selection reference for performing efficient edging, because a tool load is different between a plus shaped lens and a minus shaped lens.

Further, it is also conceivable to use a combination of the attributes of the edging tool and an edging volume calculation result of the shape element portion.

Namely, the tool selection reference used for the edging tool allocation processing (S40) may be set based on the attributes of the edging tool (tool diameter, tool rotation speed, and tool moving speed, etc.) or at least one of the edging volume calculation result of the shape element portion to be edged.

Further, the abovementioned embodiment shows a case that the priority order of the tool used in each layer edging order determination processing (S480) of the edging tool allocation processing (S40), is based on the attributes of the edging tool 11 of the lens circumferential edger 1. Specifically, the tool diameter which is one of the attributes of the edging tool 11 is focused as the priority order of using the tool, and the edging tool having a large tool diameter is preferentially used. However, the priority order of using the tool is not limited thereto, and the following example may be acceptable.

As other example of the priority order of using the tool, the calculation result of the edging volume of the shape element portion to be edged, is used. For example, if the edging volume of the shape element portion is calculated, the edging time required for the edging of the shape element portion can be calculated using the calculation result of the edging volume. Then, if the edging time is calculated, end of the edging of this shape element portion can be predicted. By predicting the end of edging, a waiting time between steps for preparing the next step (tool preparation, etc., used for the next step) can be minimum short. Namely, by predicting the end of edging based on the calculation result of the edging volume, a total edging time of the edging by a plurality of types of edging tools 11, can be suppressed to be necessary minimum, by employing the tool use order so that the waiting time between steps can be minimum.

As further other example of the priority order of using the tool, a tool mounting structure of the lens circumferential edger 1, can be given. For example, when the lens circumferential edger 1 has a tool changer, etc., a moving efficiency for selecting the tool is changed, depending on an arrangement state of the edging tool 11 in a device, the edging tool 11 being used in every steps. Therefore, in order to obtain an optimal moving efficiency for selecting the tool, it is conceivable to employ a tool use order in consideration of the arrangement order of each edging tool 11 in the device.

Further, each example given here may be used in combination.

Namely, the priority order of the tool used in each layer edging order determination processing (S480) of the edging tool allocation processing (S40), may be set based on at least one of the attributes of the edging tool (tool diameter, tool rotation speed, and tool moving speed, etc.), the calculation result of the edging time of shape element portion to be edged or the tool mounting structure of the lens circumferential edger 1

### (tool arrangement order, etc.)

### Description of Signs and Numerals

- 1: Lens circumferential edger
- 2: Communication line
- 3: Edging controller (data processing device)
- 4: Broad communication line network
- 5: Lens ordering side terminal device
- 11: Edging tool
- 12: Circumferential edging part
- 13: Edging controller
- 31: Data acquisition part
- 32: Shape division processing part
- 33: Size determination part
- 34: Tool allocation part
- 35: Edging instruction part
- 36: Database part
- 51: Three-dimensional lens shape
- 52: Convex surface side outer shape
- 53: Concave surface side outer shape
- 54: Projection shape
- 55: Circumscribed square
- 56: Edged outermost shape
- 57a, 57b, 57c, 57d: Penetrated edging shape portion
- 58: Convex surface side non-penetrated edging shape portion
- 59: Concave surface side non-penetrated edging shape portion
- 71: Uncut lens

## Claims

1. A shape division method for dividing three-dimensional shape data of a spectacle lens into data regarding a plurality of shape element portions used for edging the spectacle lens, comprising:
a projection shape acquisition step of acquiring data regarding a projection shape of a circumferential edge of the spectacle lens as projection shape data based on the three-dimensional shape data;
an outermost shape extraction step of obtaining a prescribed circumscribed graphic shape circumscribing a projection shape specified by the projection shape data at each prescribed angle while changing a relative angle of the projection shape and the circumscribed graphic shape, and extracting data regarding a shape of an inside area common to each of all obtained circumscribed graphic shapes, as outermost edging shape data; and
a penetrated edging shape extraction step of obtaining a differential area between a shape specified by the outermost edging shape data and the projection shape specified by the projection shape data, and extracting data regarding a shape portion of the obtained differential area as penetrated edging shape data.

2. The shape division method according to claim 1, comprising:
an outer shape acquisition step of acquiring convex surface side shape data regarding an outer shape on a convex surface side of the spectacle lens and concave surface side shape data regarding an outer shape on an concave surface side of the spectacle lens, from the three-dimensional shape data, prior to the projection shape acquisition step; and
a non-penetrated edging shape extraction step of obtaining a differential area between a projection shape specified by the projection shape data and a convex surface side shape specified by the convex surface side shape data, and extracting data regarding a shape portion of the obtained differential area as convex surface side edging shape data, and obtaining a differential area between a projection shape specified by the projection shape data and a concave surface side shape specified by the concave surface side shape data, and extracting data regarding a shape portion of the obtained differential area as concave surface side edging shape data,
wherein in the projection shape acquisition step, the projection shape data is acquired by synthesizing the convex surface side outer shape specified by the convex surface side shape data and the concave surface side outer shape specified by the concave surface side shape data.

3. A shape division program for causing a computer that processes three-dimensional shape data of a spectacle lens to execute:
an outer shape acquisition step of acquiring a convex surface side shape data regarding an outer shape on a convex surface side of the spectacle lens and concave surface side shape data regarding an outer shape on a concave surface side of the spectacle lens, form three-dimensional shape data
a projection shape acquisition step of acquiring data regarding a projection shape obtained by synthesizing the convex surface side outer shape based on the convex surface side shape data and the concave surface side outer shape based on the concave surface side shape data, as projection shape data;
an outermost shape extraction step of obtaining a prescribed circumscribed graphic shape circumscribing the projection shape specified by the projection shape data at each prescribed angle while changing a relative angle of the projection shape and the circumscribed graphic shape, and extracting data regarding a shape of an inside area common to each of all obtained circumscribed graphic shapes, as outermost edging shape data
a penetrated edging shape extraction step of obtaining a differential area between an outer shape specified by the outermost edging shape data and the projection shape specified by the projection shape data, and extracting data regarding a shape portion of the obtained differential area as penetrated edging shape data; and
a non-penetrated edging shape extraction step of obtaining a differential area between a projection shape specified by the projection shape data and a convex surface side shape specified by the convex surface side shape data, and extracting data regarding a shape portion of the obtained differential area as convex surface side edging shape data, and obtaining a differential area between a projection shape specified by the projection shape data and a concave surface side shape specified by the concave surface side shape data, and extracting data regarding a shape portion of the obtained differential area as concave surface side edging shape data.

4. A data processing device, configured including a computer that executes the shape division program described in claim 3.

5. A lens data processing method, comprising:
a projection shape acquisition step of acquiring data regarding a projection shape of a circumferential edge of a spectacle lens based on three-dimensional shape data of the spectacle lens;
an outermost shape extraction step of obtaining a prescribed circumscribed graphic shape circumscribing the projection shape specified by the projection shape data at each prescribed angle while changing a relative angle of the projection shape and the circumscribed graphic shape, and extracting data regarding a shape of an inside area common to each of all obtained circumscribed graphic shapes, as outermost edging shape data; and
a size determination step of determining an outer size of an uncut lens which is a base of the spectacle lens, based on the outermost edging shape data.

6. A lens edging method, comprising:
an edging step of performing edging to an uncut lens having an outer size determined by the lens data processing method described in claim 5.

7. A lens data processing program for causing a computer that processes three-dimensional data of a spectacle lens, to execute:
a projection shape acquisition step of acquiring data regarding a projection shape of a circumferential edge of the spectacle lens based on the three-dimensional shape data, as projection shape data;
an outermost shape extraction step of obtaining a prescribed circumscribed graphic shape circumscribing the projection shape specified by the projection shape data at each prescribed angle while changing a relative angle of the projection shape and the circumscribed graphic shape, and extracting data regarding a shape of an inside area common to each of all obtained circumscribed graphic shapes, as outermost edging shape data; and
a size determination step of determining an outer size of an uncut lens which is a base of the spectacle lens, based on the outermost edging shape data.

8. A data processing device, configured including a computer that executes the shape division program described in claim 7.
